(19) Europäisches Patentamt
European Patent Office
Office européen des brevets

(11) EP 4 640 725 A1

(12) **EUROPEAN PATENT APPLICATION**
published in accordance with Art. 153(4) EPC

(43) Date of publication:
**29.10.2025 Bulletin 2025/44**

(21) Application number: **23906929.7**

(22) Date of filing: **15.12.2023**

(51) International Patent Classification (IPC):
***C08G 12/02*** *(2006.01)*

(52) Cooperative Patent Classification (CPC):
**C08G 12/02**

(86) International application number:
**PCT/JP2023/045084**

(87) International publication number:
**WO 2024/135567 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2022 JP 2022204233**

(71) Applicant: **National Institute for Materials Science**
**Tsukuba-shi, Ibaraki 305-0047 (JP)**

(72) Inventors:
- **NAITO Masanobu**
  **Tsukuba-shi, Ibaraki 305-0047 (JP)**
- **NAKAMURA Yasuyuki**
  **Tsukuba-shi, Ibaraki 305-0047 (JP)**
- **FUJITA Takehiro**
  **Tsukuba-shi, Ibaraki 305-0047 (JP)**
- **KAWAI Morio**
  **Tsukuba-shi, Ibaraki 305-0047 (JP)**

(74) Representative: **J A Kemp LLP**
**80 Turnmill Street**
**London EC1M 5QU (GB)**

(54) **POLYMER AND METHOD FOR SYNTHESIS THEREOF**

(57) A polymer has a structure including a repeating unit (I) that is a N,N'-methylenediimine derivative represented by the following formula (1) or (2) and a repeating unit (II) that is a substituted or unsubstituted divalent hydrocarbon group. In formulae (1) and (2), *1 to *3, *12, and *13 each represent a bonding position, and in formula (2), $R^{11}$ is a monovalent aliphatic hydrocarbon group. The polymer can be produced at low cost and has decomposability.

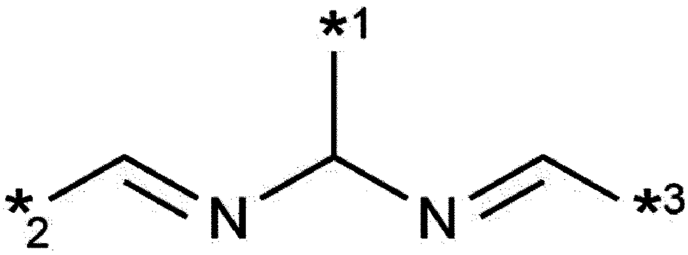

・・・(1)

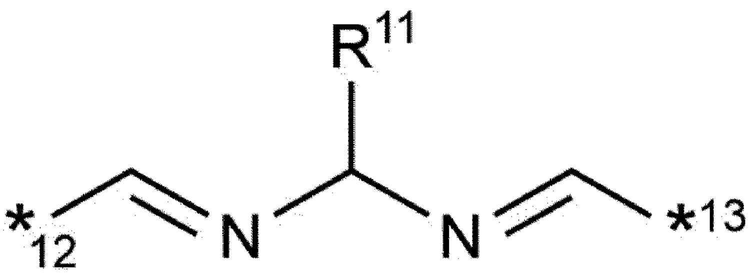

・・・(2)

EP 4 640 725 A1

[FIG.12]

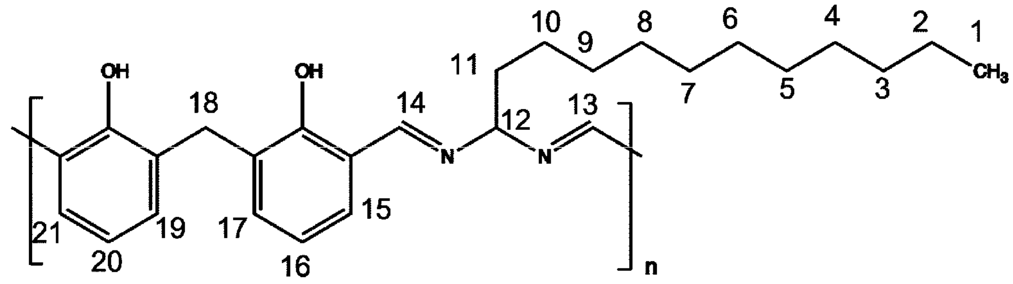

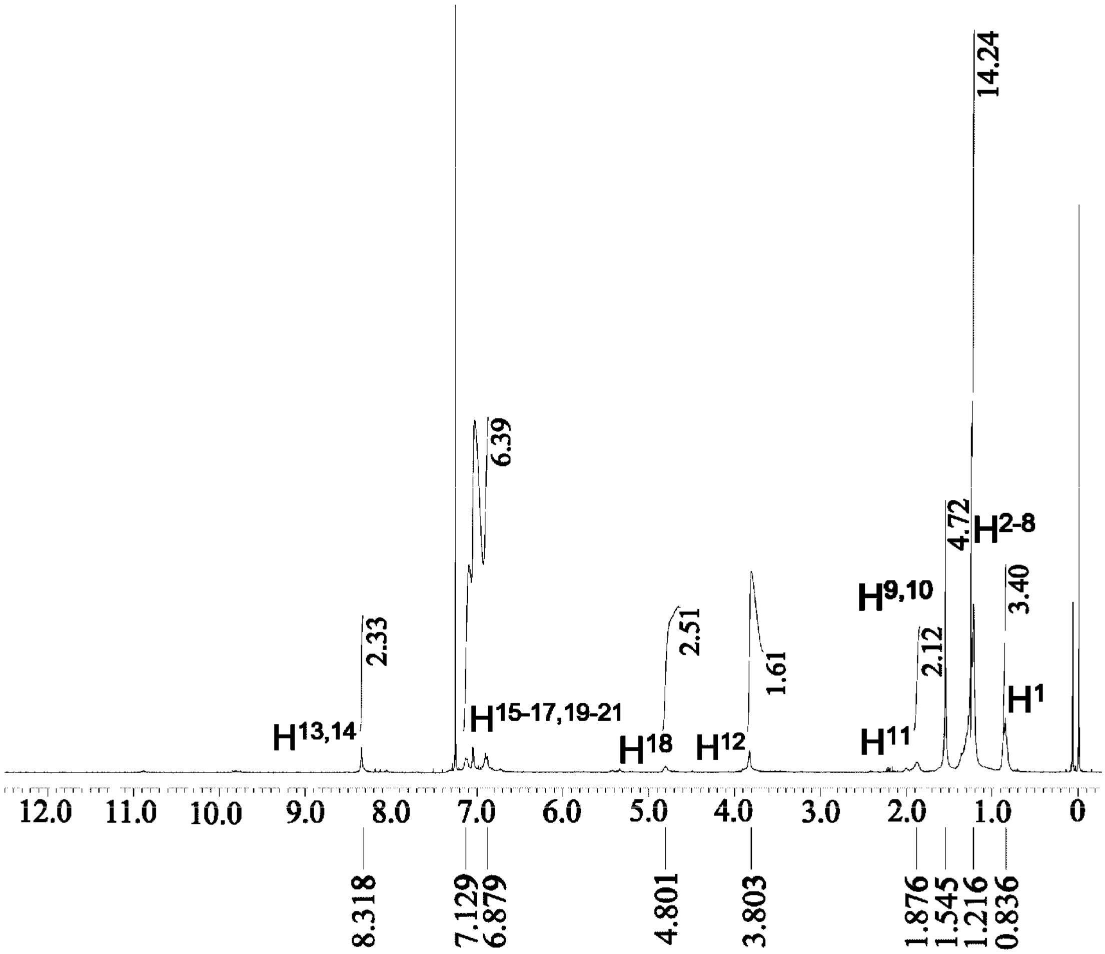
H13,14
2.33
H15-17,19-21
6.39
H18
2.51
H12
1.61
H11
H9,10
2.12
4.72
H2-8
14.24
3.40
H1
12.0 11.0 10.0 9.0 8.0 7.0 6.0 5.0 4.0 3.0 2.0 1.0 0
8.318
7.129
6.879
4.801
3.803
1.876
1.545
1.216
0.836

## Description

### Field

The present invention relates to a polymer and a method for synthesis thereof.

### Background

In today's world, where addressing environmental issues has become a top priority, ammonia is attracting attention again as a next-generation raw material for a decarbonized society. Ammonia does not produce any carbon dioxide during combustion ($4NH_3 + 3O_2 \rightarrow 2N_2 + 6H_2O$). Therefore, ammonia can be used as a new energy source to replace fossil fuels and is expected in the applications for fuel, power generation, and hydrogen storage.

Ammonia can also be used as a material for polymers such as plastics. The plastics industry is making great strides toward a decarbonized society, and ammonia-based plastics have the potential to make significant progress in this research. Known nitrogen-containing polymers derived from ammonia include urea resin, melamine resin, polyacrylonitrile, polyurethane, polyamide, and polyimide. For example, Patent Literature 1 discloses an aromatic polyimine obtained by casting a composition of (A) an aromatic polyimine oligomer synthesized from aromatic dialdehyde and diamine, (B) a ketone resin, and (C) an alkoxysilane dissolved in a solvent, onto a suitable base material, and heating the composition. Patent Literature 2 discloses a polyimine used as a curing agent for rubber compositions, in which a hydrocarbon group containing at least two carbon atoms is present between two imine groups.

As a general tendency, polymers with nitrogen atoms in the main chain generally have higher heat resistance than those composed of hydrocarbons. Two factors can be considered to enhance heat resistance. One is the inclusion of rigid structures such as amide and imide bonds. The other is the formation of network polymers with many cross-linking points due to the reactivity of amines. Such strong structures also contribute to various functional material properties, including mechanical strength.

In recent years, recycling of polymers has also been attracting attention due to environmental concerns. Currently, there are three ways to recycle polymer materials: thermal recycling for use as fuel in thermal power generation; material recycling for use after physical crushing into powder or flakes and remolding; and chemical recycling for use in other applications after decomposition by chemical reaction. Compared with the other processing methods, chemical recycling is the most environmentally friendly processing method because of its advantages of low carbon dioxide emissions, low refining costs, and high purity after refining.

### Citation List

#### Patent Literature

Patent Literature 1: Japanese Unexamined Patent Application Publication No. H11-269380
Patent Literature 2: Japanese Unexamined Patent Application Publication No. 2015-528845

### Summary

#### Technical Problem

As described above, conventional nitrogen-containing polymers have the advantages of high heat resistance and mechanical strength, but on the other hand, they tend to be more expensive materials than petroleum-derived plastics. This is partly because conventional nitrogen-containing polymers cannot be synthesized directly from ammonia, but synthesized via nitrogen-containing monomers. Ammonia is first converted into nitrogen-containing monomers such as amines, and then the monomers are polymerized to yield nitrogen-containing polymers. Therefore, there is a need for nitrogen-containing polymers that can be synthesized directly from ammonia in a single step.

As described above, chemical recycling is an excellent polymer recycling method, but its practical application has not progressed because it requires research from molecular design, and the chemical recycling rate for waste plastics in Japan is only 4% as of 2020. Under these circumstances, in nitrogen-containing polymers, there is a need for decomposable polymers that can be chemically recycled.

The present invention is to solve these problems. In other words, the present invention provides a polymer that can be produced at low cost and has decomposability.

Solution to Problem

The inventors of the present invention have conducted elaborate studies in order to achieve the object and found that the object can be achieved by the following configuration.

[1] A polymer having a structure including a repeating unit (I) that is a N,N'-methylenediimine derivative represented by the formula (1) or (2) described later and a repeating unit (II) that is a substituted or unsubstituted divalent hydrocarbon group, wherein in the formulae (1) and (2), *1 to *3, *12, and *13 each represent a bonding position, and in formula (2), $R^{11}$ is a monovalent aliphatic hydrocarbon group.
[2] The polymer according to [1], wherein the repeating unit (I) is a trivalent group represented by the formula (1).
[3] The polymer according to [2], wherein the repeating unit (II) is a divalent aliphatic hydrocarbon group.
[4] The polymer according to [3], wherein the repeating unit (II) is a divalent linear alkylene group having 4 or more carbon atoms.
[5] The polymer according to any one of [2] to [4], wherein the structure including the repeating unit (I) and the repeating unit (II) comprises a repeating unit represented by the following formula (3) described later, and in the formula (3), $R^1$ is a divalent aliphatic hydrocarbon group.
[6] The polymer according to [1], wherein the repeating unit (I) is a divalent group represented by the formula (2), and the repeating unit (II) is a divalent group containing an aromatic ring.
[7] The polymer according to [6], wherein the structure including the repeating unit (I) and the repeating unit (II) comprises a repeating unit (IV) represented by the following formula (4) described later, and in the formula (4), $R^{11}$ is a monovalent aliphatic hydrocarbon group and $R^{12}$ is a divalent group containing an aromatic ring.
[8] A method for synthesizing the polymer according to any one of [1] to [7], the method including reacting at least one aldehyde with ammonia.
[9] The method for synthesizing the polymer according to [8], wherein the repeating unit (I) of the polymer is a trivalent group represented by the formula (1), and the at least one aldehyde is a dialdehyde in which two aldehyde groups are bonded to a substituted or unsubstituted divalent hydrocarbon group that is the repeating unit (II) of the polymer.
[10] The method for synthesizing the polymer according to [8], wherein the repeating unit (I) of the polymer is a divalent group represented by the formula (2), and the at least one aldehyde includes a dialdehyde in which two aldehyde groups are bonded to a substituted or unsubstituted divalent hydrocarbon group that is the repeating unit (II) of the polymer, and a monoaldehyde in which one aldehyde group is bonded to a monovalent aliphatic hydrocarbon group that is $R^{11}$ in the formula (2).

Advantageous Effects of Invention

The present invention provides a polymer that can be produced at low cost and has decomposability.

Brief Description of Drawings

FIG. 1 is a chart of an IR spectrum of a network polyimine synthesized in Experiment 1.
FIG. 2A is a chart illustrating the result of TG and DTG measurement of the network polyimine synthesized in Experiment 1.
FIG. 2B is a chart illustrating the result of DSC measurement of the network polyimine synthesized in Experiment 1.
FIG. 3 is a chart illustrating the result of $^1$H-NMR measurement of a linear polyimine synthesized in Experiment 2.
FIG. 4 is a chart of an IR spectrum of the linear polyimine synthesized in Experiment 2.
FIG. 5A is a chart illustrating the result of TG and DTG measurement of the linear polyimine synthesized in Experiment 2.
FIG. 5B is a chart illustrating the result of DSC measurement of the linear polyimine synthesized in Experiment 2.
FIG. 6A is a diagram illustrating the decomposition reaction formula of the linear polyimine synthesized in Experiment 2.
FIG. 6B is a chart illustrating the result of $^1$H-NMR measurement of the linear polyimine in Experiment 2 after a decomposition process.
FIG. 7 is a chart of an IR spectrum of a network polyimine synthesized in Experiment 3.
FIG. 8 is a chart illustrating the result of $^{13}$C solid-state NMR measurement of the network polyimine synthesized in Experiment 3.
FIG. 9A is a chart illustrating the result of TG and DTG measurement of the network polyimine synthesized in Experiment 3.

FIG. 9B is a chart illustrating the result of DSC measurement of the network polyimine synthesized in Experiment 3.
FIG. 10 is a chart illustrating the result of $^1$H-NMR measurement of the network polyimine synthesized in Experiment 3 after a decomposition process.
FIG. 11 is an image illustrating a formed product of a linear polyimine synthesized in Experiment 4 and its flexibility.
FIG. 12 is a chart illustrating the result of $^1$H-NMR measurement of the linear polyimine synthesized in Experiment 4.
FIG. 13 is a chart of an IR spectrum of the linear polyimine synthesized in Experiment 4.
FIG. 14 is a chart of a stress-strain curve of the linear polyimine synthesized in Experiment 4.
FIG. 15 is an image of a film of the linear polyimine in Experiment 4 soaked in 0.1 M hydrochloric acid aqueous solution at room temperature.
FIG. 16 is a comparison image of the linear polyimine in Experiment 4 in each solvent upon soaking and after soaking for 4 days.

Description of Embodiments

The present invention will be described in detail below. Although the following constituent elements may be described based on representative embodiments of the invention, the present invention is not limited to such embodiments. In the present description, a numerical range represented by "to" means a range that includes the numerical values listed before and after "to" as the lower and upper limits.
In the notations of groups (groups of atoms) in the present description, the notations not specified as substituted or unsubstituted encompass those with substituents as well as those without substituents to the extent that the effect of the present invention is not impaired. For example, "alkyl group" encompasses not only alkyl groups without substituents (unsubstituted alkyl groups) but also alkyl groups with substituents (substituted alkyl groups). This is applicable to each compound.

[First Embodiment]

A polymer according to the present embodiment has a structure including a repeating unit (I) that is a N,N'-methylenediimine derivative represented by the following formula (1), and a repeating unit (II) that is a substituted or unsubstituted divalent hydrocarbon group. In formula (1), *1 to *3 each represent a bonding position.

[Chem. 1]

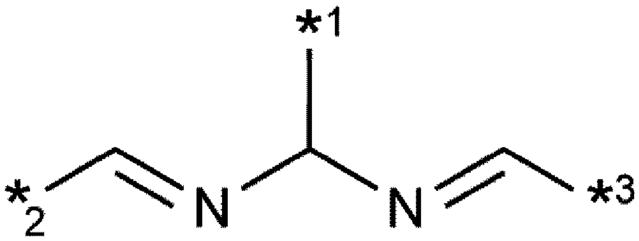

· · · (1)

The repeating unit (I) represented by formula (1) is a trivalent group. Thus, the structure including the repeating unit (I) and the repeating unit (II) is a network structure (three-dimensional mesh structure), and the polymer according to the present embodiment is a network polymer (network polyimine). The network polymer is a generic term for polymers, polymer chains of which form a network structure (three-dimensional mesh structure).
The repeating unit (I) that is a trivalent group is a cross-linking point of the network structure. The network polymer according to the present embodiment has high heat resistance and mechanical strength because the repeating unit (I) contains imine bonds, which is a rigid structure. It is preferable that the repeating unit (I) and the repeating unit (II) are bonded alternately. This configuration ensures all of solubility, processability, heat resistance, and mechanical strength.
When the repeating unit (I) and the repeating unit (II) are bonded alternately in the network structure, the repeating unit (II) is bonded at each of the bonding positions *1 to *3 in formula (1) of the repeating unit (I).
The repeating unit (II) is not limited as long as it is a substituted or unsubstituted divalent hydrocarbon group. The hydrocarbon group may be an aliphatic hydrocarbon group or an aromatic hydrocarbon group. The aliphatic hydrocarbon group may be linear, branched-chain, or cyclic divalent group, or a combination thereof, for example, with 1 to 18 or 3 to 8 carbon atoms. As one embodiment, the carbon number may be 10 to 16.
The aromatic hydrocarbon group may have 5 to 24 or 6 to 12 carbon atoms, and may be a monocyclic compound-derived group or a fused ring compound-derived group. The repeating unit (II) may be a divalent group including an

aliphatic hydrocarbon group and an aromatic hydrocarbon group. Examples of substituents include hydroxyl, amino, alkoxy (methoxy, ethoxy, etc.), and cyano groups, halogen atoms (fluorine, chlorine, bromine atoms, etc.), and ionic hydrophilic groups (carboxylates, sulfonates, etc.).

The repeating unit (II) is preferably a divalent aliphatic hydrocarbon group. Although the polymer according to the present embodiment has decomposability as described later, an increase in the acidity of the central carbon sandwiched between two nitrogen atoms in formula (1) may lead to intramolecular cyclization and formation of an imidazoline ring. In terms of polymer decomposability, it is more advantageous that intramolecular cyclization does not occur. The bonding of an aliphatic hydrocarbon group, which is an electron-donating group, to at least the bonding position *1 among three bonding positions in formula (1) reduces the acidity of the central carbon and inhibits intramolecular cyclization more, thus improving the polymer decomposability. Furthermore, in terms of promoting polymer synthesis, the divalent aliphatic hydrocarbon group is preferably a linear alkylene group having 4 or more carbon atoms or 4 to 8 carbon atoms.

The network structure according to the present embodiment may have only one type of group or may have different types of groups as the repeating unit (II). However, in terms of minimizing the number of raw material types and reducing the time and effort of raw material management, the repeating unit (II) that constitutes the network structure is preferably of one type. In this case, the same type of repeating unit (II) is bonded to all the bonding positions *1 to *3 in formula (1) of the repeating unit (I). In other words, the network polymer according to the present embodiment preferably has a network structure constituted with a repeating unit (III) represented by the following formula (3). In formula (3), $R^1$ is a divalent hydrocarbon group and *31 to *33 each represent a bonding position. Exemplary forms of the divalent hydrocarbon group include those described as the repeating unit (II), and the suitable forms are also the same.

[Chem. 2]

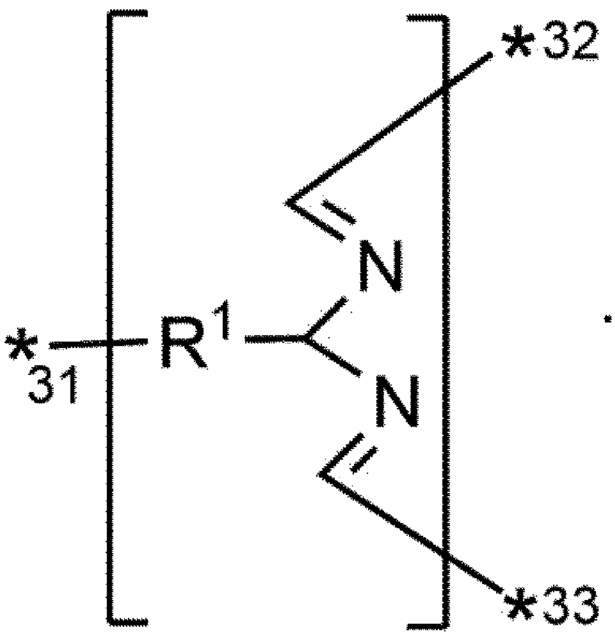

・・・(3)

In the network structure constituted with the repeating unit (III), the bonding position *31 of another repeating unit (III) is bonded to the bonding position *32 of one repeating unit (III). The bonding position *31 of yet another repeating unit (III) is bonded to the bonding position *33 of one repeating unit (III). In other words, the network structure constituted with the repeating unit (III) has a structure represented by the following formula (5). In formula (5), * represents a bonding position and $R^1$ is the same as described in formula (3).

[Chem. 3]

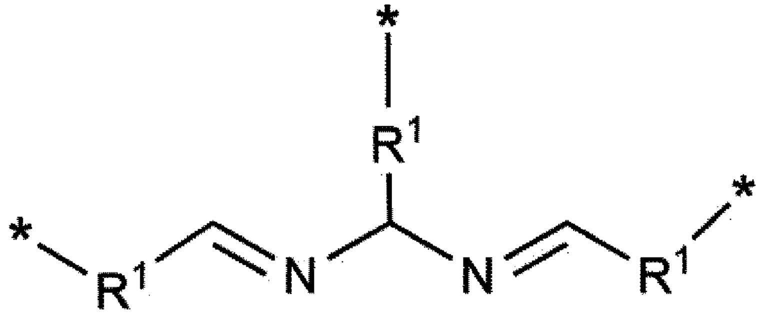

· · · (5)

The network structure according to the present embodiment may be constituted only with the repeating units (I) and (II) or may contain another functional group to the extent that the effect of the present embodiment is achieved. However, it is preferable that the main constituent units of the network structure are the repeating units (I) and (II).

The molecular weight of the network polymer according to the present embodiment is not limited, but for example, the weight average molecular weight may be 1,000 to 1,000,000 or 10,000 to 100,000.

<Method for Producing Network Polymer>

The network polymer according to the present embodiment can be synthesized by reacting an aldehyde with ammonia. Thus, unlike conventional nitrogen-containing polymers, the network polymer according to the present embodiment can significantly reduce production cost and production time because it does not need to be produced via nitrogen-containing monomers. In the present embodiment, the aldehyde is a dialdehyde in which the repeating unit (II), that is, a substituted or unsubstituted divalent hydrocarbon group is bonded to two aldehyde groups.

For example, first, the dialdehyde is dissolved in a solvent, and then, ammonia dissolved in a solvent is added to the solvent to prepare a reaction solution. The reaction solution is stirred and allowed to react for a predetermined time to obtain the network polymer as a product. The following formula (6) illustrates the synthesis of the network polymer. In formula (6), R represents the repeating unit (II). In this way, the network polymer can be synthesized in a single batch in a very simple process using ammonia. The raw material ammonia may be in a gas state or may be dissolved in a reaction solution (solvent), or ammonium ions, ammonium salts, or the like can be used as a source of ammonia.

[Chem. 4]

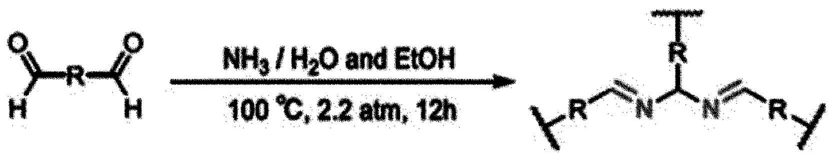


· · · (6)

The reaction conditions (synthesis conditions) and the like are not limited and can be adjusted as appropriate, but may be adjusted to the following ranges in terms of promoting the reaction. Examples of the solvent of the reaction solution include protic solvents such as water, methanol, ethanol, butanol, pentanol, hexanol, and 2-isopropanol. The concentration of the dialdehyde in the reaction solution may be 10 mM to 1 M (M = mol/L) or 50 mM to 0.5 M. The concentration of ammonia may be 20 mM to 2 M or 100 mM to 1 M. The reaction temperature may be 25°C to 100°C, and the reaction time may be 1 to 12 hours.

After the synthesis reaction, the synthesized network polymer may be, for example, re-precipitated, filtered, washed, and dried by general-purpose methods as necessary.

<Decomposability of Network Polymer>

The network polymer according to the present embodiment has decomposability. In the present description, decomposability means the property of being decomposable into monomers or oligomers through a chemical reaction. The network polymer according to the present embodiment having decomposability is expected to be chemically recycled. The network polymer according to the present embodiment is decomposed, for example, by an acidic decomposing

solution. When placed under an acidic condition, the network polymer can undergo a reverse reaction of formula (6) above and decompose into the raw materials that are aldehyde (monomer) or its oligomer and ammonia (ammonium ions in the acidic solution). It is preferable that the network polymer according to the present embodiment exhibits decomposability under a strong acid condition (e.g., pH 1 or less). With this configuration, in general applications, the network polymer can be present stably without decomposing during use.

The conditions and the like for the decomposition process for the network polymer are not limited and can be adjusted as appropriate, but may be adjusted to the following ranges in terms of promoting the decomposition reaction. The decomposing solution preferably includes an inorganic acid (aqueous solution of an inorganic acid). Examples of the inorganic acid include hydrochloric acid and sulfuric acid. These inorganic acids may be used alone or may be used in a combination of two or more. The concentration of the inorganic acid may be 0.1 N to 1 N or 0.1 N to 0.3 N. The decomposing solution may further contain an organic solvent such as methanol, ethanol, acetone, acetonitrile, dioxane, and N,N-dimethylformamide (DMF). Acetonitrile is preferred in terms of promoting the decomposition reaction. These organic solvents may be used alone or may be used in a combination of two or more.

The network polymer (polyimine) according to the present embodiment described above can reduce production cost and production time, and has high heat resistance and mechanical strength, as well as decomposability. Thus, the applications for various purposes can be expected, such as adhesives, garbage bags, paints, construction materials, medical devices, and solid fuels.

[Second Embodiment]

In the first embodiment described above, a N,N'-methylenediimine derivative represented by formula (1) is used as the repeating unit (I). In contrast, in the present embodiment (second embodiment), a N,N'-methylenediimine derivative represented by the following formula (2) is used as the repeating unit (I). In other words, the polymer according to the present embodiment has a structure including a repeating unit (I) that is a N,N'-methylenediimine derivative represented by formula (2), and a repeating unit (II) that is a substituted or unsubstituted divalent hydrocarbon group. In formula (2), *12 and *13 each represent a bonding position, and $R^{11}$ represents a monovalent aliphatic hydrocarbon group.

[Chem. 5]

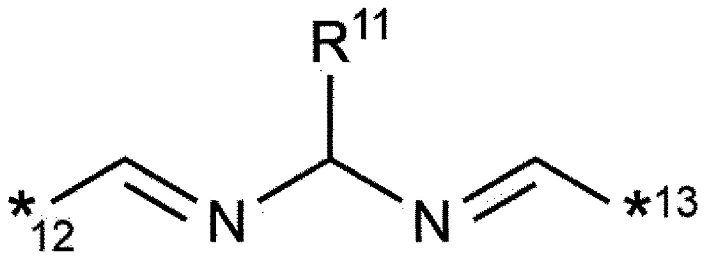

・・・(2)

Since the repeating unit (I) represented by formula (2) is a divalent group, the structure including the repeating unit (I) and the repeating unit (II) is linear, and the polymer according to the present embodiment is a linear polymer (linear polyimine). The polymer according to the present embodiment is a polyimine that contains many imine bonds, which are a rigid structure, and thus has sufficiently high heat resistance and mechanical strength for a linear polymer. Since the polymer according to the present embodiment is a linear polymer, it is soluble in an organic solvent and has high formability, for example, can be formed into a film. In terms of enhancing heat resistance and mechanical strength, it is preferable that the repeating unit (I) and the repeating unit (II) are bonded alternately in the linear structure.

In formula (2), $R^{11}$ is not limited as long as it is a monovalent aliphatic hydrocarbon group, and may be a linear, branched-chain, or cyclic monovalent group, or a combination thereof, for example, with 1 to 18 or 3 to 8 carbon atoms.

On the other hand, when the carbon number is 10 to 16, thermoforming such as press forming tends to be easy, and excellent decomposability is achieved at the same time.

In terms of promoting polymer synthesis, $R^{11}$ (monovalent aliphatic hydrocarbon group) is preferably a linear alkyl group. The polymer according to the present embodiment has more excellent decomposability, because $R^{11}$ in formula (2) is an aliphatic hydrocarbon group, which is an electron-donating group, and thus intramolecular cyclization is suppressed.

The forms listed in the first embodiment can be used as the substituted or unsubstituted divalent hydrocarbon group of the repeating unit (II). In the present embodiment, the repeating unit (II) is preferably a divalent group containing an aromatic ring. The inclusion of an aromatic ring, which is a rigid structure, further increases the heat resistance and mechanical strength of the polymer. The divalent group containing an aromatic ring is, for example, the following group. In

the following group, * represents a bonding position.

[Chem. 6]

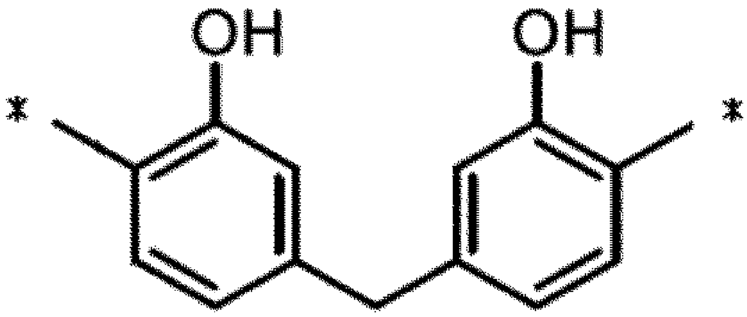

The polymer according to the present embodiment may have only one type of group or may have different types of groups as the repeating unit (II). However, in terms of minimizing the number of raw material types and reducing the time and effort of raw material management, the repeating unit (II) that constitutes the linear structure is preferably of one type. In this case, the same type of repeating unit (II) is bonded to the bonding positions *12 and *13 in formula (2) of the repeating unit (I). In other words, the polymer according to the present embodiment preferably has a linear structure constituted with a repeating unit (IV) represented by the following formula (4). In formula (4), $R^{11}$ is a monovalent aliphatic hydrocarbon group, and $R^{12}$ is a divalent group containing an aromatic ring. Exemplary forms of $R^{11}$ (monovalent aliphatic hydrocarbon group) include those described above, and the suitable forms are also the same. Exemplary forms of the divalent group containing an aromatic ring as $R^{12}$ include those described as the repeating unit (II), and the suitable forms are also the same.

[Chem. 7]

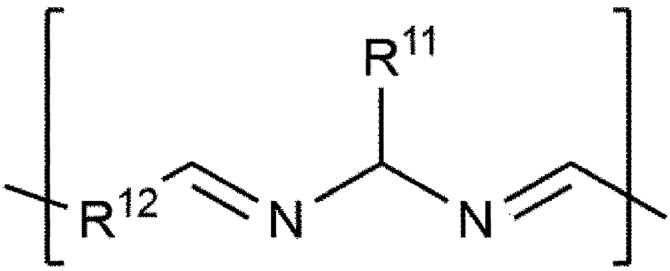

· · · (4)

The linear structure of the polymer according to the present embodiment may be constituted only with the repeating units (I) and (II), or may contain another functional group to the extent that the effect of the present embodiment is achieved. However, it is preferable that the main constituent units of the linear structure are the repeating units (I) and (II).

The molecular weight of the polymer according to the present embodiment is not limited, but for example, the weight average molecular weight may be 1,000 to 10,000,000, 1,000 to 1,000,000, or 10,000 to 100,000.

<Method for Producing Polymer>

The polymer according to the present embodiment can be synthesized by reacting an aldehyde with ammonia (or a salt thereof). More specifically, the polymer according to the present embodiment can be synthesized by reacting a dialdehyde in which two aldehyde groups are bonded to a substituted or unsubstituted divalent hydrocarbon group that is the repeating unit (II) included in the polymer, and a monoaldehyde in which one aldehyde group is bonded to a monovalent aliphatic hydrocarbon group that is $R^{11}$ in formula (2), with ammonia (or a salt thereof). For example, first, the dialdehyde and the monoaldehyde are dissolved in a solvent, and then ammonia (or a salt thereof) dissolved in a solvent is added to the solvent to prepare a reaction solution. The reaction solution is stirred and allowed to react for a predetermined time to obtain the polymer as a product. The following formula (7) illustrates the synthesis of the polymer. In formula (7), $R^{11}$ is a monovalent aliphatic hydrocarbon group, and $R^{12}$ is a divalent group containing an aromatic ring. In this way, the polymer according to the present embodiment can be synthesized in a single batch in a very simple process using ammonia (or a salt thereof), in the same manner as the polymer of the first embodiment. In the following formula, TEA is an abbreviation of

triethylamine.

[Chem. 8]

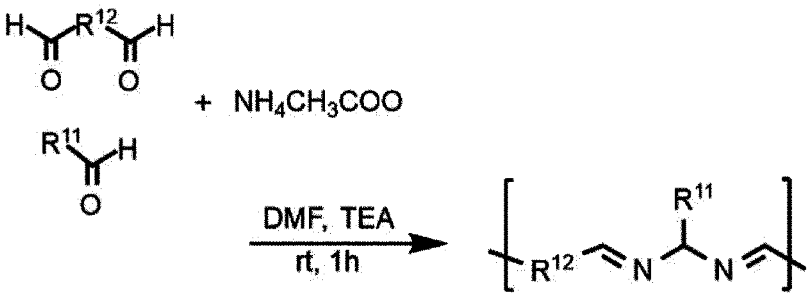


· · · (7)

The reaction conditions (synthesis conditions) and the like are not limited and can be adjusted as appropriate, but may be adjusted to the following ranges in terms of promoting the reaction. Examples of the solvent in the reaction solution include N,N-dimethylformamide (DMF), dimethyl sulfoxide, ethyl acetate, butyl acetate, and methyl ethyl ketone. The concentration of the dialdehyde in the reaction solution may be 10 mM to 1 M (M = mol/L) or 50 mM to 0.5 M. The concentration of the monoaldehyde may be 10 mM to 1 M (M = mol/L) or 50 mM to 0.5 M. The concentration of ammonia (for example, the concentration of ammonium acetate as a source of ammonia) may be 10 mM to 20 M or 200 mM to 1 M. The reaction temperature may be 25°C to 100°C, and the reaction time may be 1 to 12 hours.

After the synthesis reaction, the synthesized polymer may be, for example, re-precipitated, filtered, washed, and dried, by general-purpose methods as necessary.

<Decomposability of Polymer>

The polymer according to the present embodiment has decomposability and can be expected to be chemically recycled, in the same manner as the polymer according to the first embodiment. The conditions and the like for the decomposition process for the polymer are not limited and can be adjusted as appropriate, but may be adjusted to the same ranges as in the first embodiment in terms of promoting the decomposition reaction.

The polymer (linear polyimine) according to the present embodiment described above can reduce production cost and production time, and has high heat resistance and mechanical strength, as well as decomposability. Since the polymer according to the present embodiment is a linear polymer, it has high formability, for example, can be formed into a film. Thus, the applications for various purposes can be expected, such as adhesives, garbage bags, paints, construction materials, medical devices, and solid fuels.

[Examples]

The present invention will be described in more detail below based on examples. The materials, amounts used, proportions, process details, process procedures, and the like described in the following examples can be changed as necessary without departing from the spirit of the present invention. Therefore, the scope of the present invention should not be interpreted as limited by the following examples.

[Experiment 1]

A network polymer (network polyimine) was synthesized by the method described below. In the polymer in this experiment, the repeating unit (II) is a divalent aliphatic hydrocarbon group.

(1) Synthesis of Dialdehyde

Prior to the synthesis of the network polymer, a monomer that was adipaldehyde was synthesized. The reaction formula and synthesis method are shown below.

[Chem. 9]

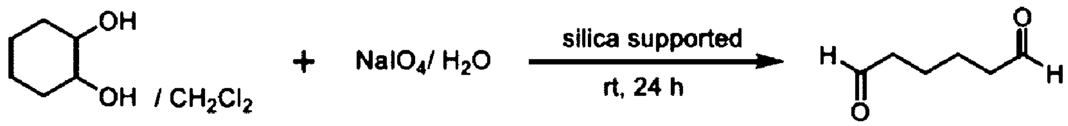


Silica gel (105 g, 1.75 mol) was diffused into methylene chloride (500 mL) and a saturated sodium periodate solution (0.65 M, 105 mL, 68.2 mmol) was added dropwise to obtain a suspension with flakes. To this, a solution of cyclohexane-1.2-diol (6.08 g, 52.3 mmol) in methylene chloride (200 mL) was added, and the mixture was stirred at room temperature for 24 hours. The reaction product was filtered through a glass filter and washed well with methylene chloride. Removing the solvent with a rotary evaporator resulted in a product (colorless liquid, yield: 86%). The product was identified by $^1$H-NMR using chloroform-d solvent, and the formation of adipaldehyde was confirmed.

(2) Synthesis of Network Polyimine

The synthesized adipaldehyde (2.28 g, 20 mmol) was dissolved in ethanol (10 mL), concentrated ammonia water (2 mL) was added, and the mixture was heated and stirred at 100°C for 12 hours in a pressure vessel (2.2 atm). The reaction product was filtered, washed with ethanol, and dried overnight at 100°C, resulting in a brown solid product (yield: 58%). The reaction formula for synthesis of the network polyimine is shown below.

[Chem. 10]

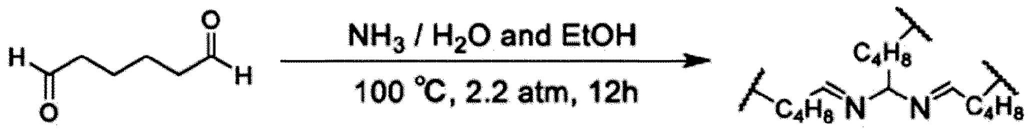


<Structural Analysis of Network Polymer>

Based on the following structural analysis results, it was confirmed that the reaction described by the formula above occurred and the network polyimine was synthesized in Experiment 1. Since the network polymer synthesized in Experiment 1 had low solubility in an organic solvent, its structure was identified by solid state analysis.

An infrared (IR) spectroscopic spectrum of the network polymer was measured using a Fourier transform infrared spectrophotometer (FT/IR6100 available from JASCO Corporation). The ATR method was used for the measurement. The analysis was performed in the measurement range of 600 to 4000 $cm^{-1}$ using an MCT detector under cooling with liquid nitrogen. The result is shown in FIG. 1. In FIG. 1, the vertical axis represents absorbance and the horizontal axis represents wavenumber (unit: $cm^{-1}$).

As illustrated in FIG. 1, an imine peak (C=N stretching vibrations) is found at 1642 $cm^{-1}$, which generally agrees with the previous study of low molecular weight compounds (1630 $cm^{-1}$), providing evidence that polyimine was formed. It can be thought that the terminal is present as imine, since no primary amine or aldehyde peak is found.

<Evaluation of Decomposability of Network Polymer>

To the network polymer (10 mg) in Experiment 1, a solvent mixture of hydrochloric acid aqueous solution and acetonitrile (volume ratio HCl(aq):$CH_3CN$ = 1:5) (decomposing solution: 1.2 mL) was added, and the mixture was stirred at 70°C for 1 hour. As a result, the polymer was dissolved, resulting in a brown solution. This solution was analyzed by $^1$H-NMR and it was confirmed that the network polymer was decomposed into oligomers.

<Evaluation of Thermal Properties of Network Polymer>

First, the 5% weight loss temperature $T_{5\%}$ was determined by TG-DTA measurement using a thermogravimetry-differential thermal analyzer (TG/DTA7300 available from Hitachi High-Tech Science Corporation). Measurement was performed under an atmospheric condition ($N_2$:$O_2$ = 4:1), using a Pt pan, from 20 to 1000°C. The measurement result (Tg and DTG) is shown in FIG. 2A.

In FIG. 2A, the first vertical axis (left side) represents thermogravimetry Tg (unit: %), the second vertical axis (right

side) represents derivative thermogravimetry DTG (unit: μg/sec), and the horizontal axis represents temperature (unit: °C).

The 5% weight loss temperature $T_{5\%}$ was determined, where it is defined as the temperature at which 5% of the weight of the sample was decomposed in thermogravimetry relative to the weight of the sample before thermogravimetry. The 5% weight loss temperature $T_{5\%}$ was 300°C.

Next, the glass transition temperature was measured by differential scanning calorimetry (DSC) using a differential scanning calorimeter (DSC 60 Plus available from Shimadzu Corporation). The measurement range was -50°C to 250°C, and the temperature increase rate was 20°C/min. A temperature program of two cycles was conducted under a nitrogen atmosphere, and the amount of heat was measured for the temperature increase process in the second cycle. The result is shown in FIG. 2B. In FIG. 2B, the vertical axis represents heat flow (unit: mW, denoted as DSC in the figure) and the horizontal axis represents temperature (unit: °C).

As illustrated in FIG. 2B, no glass transition temperature was observed in the DSC measurement. It is common for network polymers to exhibit no glass transition temperature (the glass transition temperature is higher than the pyrolysis temperature), and the same is thought to be true for this system.

Based on these results, it was confirmed that the network polymer in Experiment 1 has high heat resistance.

Next, a decomposability evaluation was performed on the sample that underwent the DSC measurement. The evaluation method is the same as the method in <Evaluation of Decomposability of Network Polymer> described above. When the sample after DSC measurement (i.e., the polymer after heating) was treated in the decomposing solution, the sample exhibited the same decomposability as the sample before DSC measurement (i.e., the polymer before heating). Based on this result, it was confirmed that the network polymer in Experiment 1 is less prone to changes such as intramolecular cyclization upon a heating process, and that the polymer has excellent decomposability.

[Experiment 2]

A linear polymer was synthesized by the method described below.

(1) Synthesis of Dialdehyde

Prior to the synthesis of the linear polymer, a monomer that was methylenebis(4,4'-salicylaldehyde) was synthesized. The reaction formula and synthesis method are shown below.

[Chem. 11]

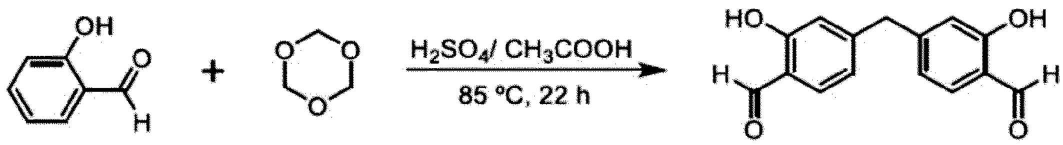


S-trioxane (1.00 g, 11 mmol) was added to a 50-mL two-neck flask, which was purged with nitrogen. Salicylaldehyde (8.95 g, 73 mmol), acetic acid (10 g), and sulfuric acid (0.309 g) were added, and the mixture was heated and stirred at 85°C for 22 hours. The reaction vessel was allowed to cool, and then a white solid precipitated, which was filtered and dissolved in methanol. Re-precipitation with water was performed, followed by drying overnight at 105°C (milky white solid, yield: 31%). The product was identified in chloroform-d by $^1$H-NMR, and the formation of the desired monomer was confirmed.

(2) Synthesis of Linear Polyimine

The synthesized methylenebis(4,4'-salicylaldehyde) (12.8 g, 50 mmol) and butyraldehyde (3.6 g, 50 mmol) were mixed and dissolved in DMF (100 ml). Ammonium acetate (77 g, 1 mol) and triethylamine (80 ml) were added simultaneously, and the mixture was stirred for 1 hour, resulting in a yellow solution. The solution was diluted with DMF (200 mL), and re-precipitation using methanol was performed. The filtered solid was dried overnight at 100°C, resulting in a product (yellow powder, yield: 75%). The synthesis reaction formula of the linear polymer is shown below. The yield of the linear polymer was 75%.

[Chem. 12]

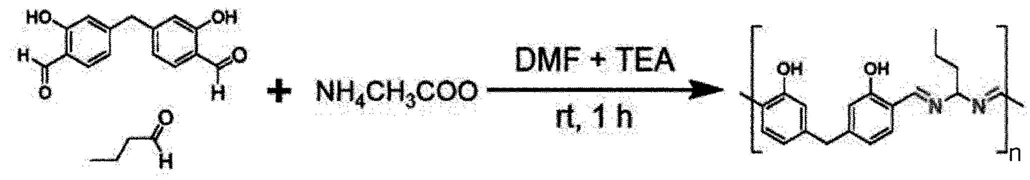


<Structural Analysis of Linear Polymer>

Based on the following structural analysis results, it was confirmed that the reaction described by the formula above occurred and the linear polyimine was synthesized in Experiment 2.

(1) $^1$H-NMR Measurement

Since the linear polymer synthesized in Experiment 2 exhibited solubility in an organic solvent, its structure was identified by $^1$H-NMR using a Fourier transform nuclear magnetic resonance spectrometer (JNM-AL400S available from JEOL Ltd.). The frequency was set to 400 MHz, dimethyl sulfoxide-d (DMSO) was used as a solvent, and the measurement was performed at room temperature. The chemical shift standard was tetramethylsilane (0 ppm). The result is shown in FIG. 3. In the figure, the vertical axis represents signal intensity and the horizontal axis represents chemical shift values (unit: ppm).

As illustrated in FIG. 3, the NMR spectrum generally showed correct integral values, and the selective synthesis of the linear polyimine was confirmed.

(2) Infrared Spectroscopic Analysis

Infrared spectroscopic analysis of the polymer (linear polyimine) in Experiment 2 was performed by the same method as for the polymer (network polyimine) in Experiment 1 described above. The result is shown in FIG. 4. In FIG. 4, the vertical axis represents absorbance and the horizontal axis represents wavenumber ($cm^{-1}$). The IR spectrum showed C=N stretching vibrations derived from methanediamine.

(3) Molecular Weight Measurement

The molecular weight of the polymer in Experiment 2 was determined by permeation column chromatography analysis (GPC) using a liquid chromatograph (LC) system (available from JASCO Corporation). The sample was dissolved in tetrahydrofuran (THF) and adjusted to a concentration of 10 mg/mL. The molecular weight was calculated based on polystyrene (PS) standard. The measurement result showed a number average molecular weight Mn: 3900, a weight average molecular weight Mw: 16000, and a poly dispersity index (Mw/Mn) of 4.1.

<Evaluation of Thermal Properties of Linear Polymer>

The thermal properties of the polymer (linear polymer) in Experiment 2 were evaluated by the same method as for the polymer (network polyimine) in Experiment 1 described above.

TG-DTA measurement was performed from 20 to 500°C using an Al pan. The measurement result (Tg and DTG) is shown in FIG. 5A. The definitions of the vertical and horizontal axes are the same as in FIG. 2A. The 5% weight loss temperature $T_{5\%}$ was 213°C.

DSC measurement was performed from -50°C to 150°C at a temperature increase rate of 20°C/min. The result is shown in FIG. 5B. The definitions of the vertical and horizontal axes are the same as in FIG. 2B. In FIG. 5B, no glass transition temperature was identified.

Based on these results, it was confirmed that the polymer in Experiment 2 has high heat resistance as a linear polymer.

<Formability>

It was confirmed that a sheet of the polymer can be produced by dissolving the polymer in Experiment 2 in chloroform and casting the solution onto a silicon mold. It was also confirmed that the produced sheet has the decomposability described below.

<Evaluation of Decomposability of Linear Polymer>

(1) Quantitative Evaluation of Decomposition Reaction

FIG. 6A is a diagram illustrating the decomposition reaction formula of the linear polyimine synthesized in Experiment 2.

It was confirmed that the polymer in Experiment 2 soaked in hydrochloric acid solution decomposed into two aldehydes of the raw materials illustrated in FIG. 6A. To confirm the quantitativeness of the reaction, the reaction was tracked by $^1$H-NMR measurement, and the imine peaks of the polymer and the aldehyde peaks of the monomers before and after the reaction were compared.

First, hydrochloric acid-d in deuterated water (0.2 mL) and DMSO-d (1 mL) were added to the polymer (10 mg) obtained in Experiment 2, and the mixture was stirred at room temperature for 12 hours. $^1$H-NMR measurement was performed for the sample before and after the reaction for 12 hours (before and after decomposition). Ethylene carbonate was used as the internal standard. The result is shown in FIG. 6B. In FIG. 6B, the vertical axis represents signal intensity and the horizontal axis represents chemical shift values (unit: ppm). In the figure, "m" means multiplet.

According to the result of the $^1$H-NMR measurement, it was confirmed that the polymer in Experiment 2 was decomposed into methylenebis(4,4'-salicylaldehyde) (conversion rate: 95%) and butyraldehyde (conversion rate: 93%). As a result of the decomposition of the polymer, ammonium ions (ammonium chloride) were also produced.

(2) Effect of Decomposing Solution Composition

The polymer sheet produced in the evaluation of <Formability> was used as a sample. The sample was soaked in decomposing solutions of various compositions and allowed to stand at room temperature, and the presence or absence of decomposition of the sample was determined.

The experiment was performed using a decomposing solution containing each of six organic solvents (methanol, ethanol, acetone, acetonitrile, dioxane, and DMF). Among these solvents, only DMF dissolves the polymer in Experiment 2, while acetone, dioxane, and DMF dissolve the monomers. Concentrated hydrochloric acid and the various organic solvents were mixed and adjusted to three different HCl concentrations of 1.2 M, 0.12 M, and 0.012 M. A total of 18 decomposing solutions were prepared, with six solvents and three different hydrochloric acid concentrations. The polymer sheet (18 mg) was submerged in 5 mL of each solution and allowed to stand at room temperature to observe its progress.

In the 0.012 M systems, except DMF that dissolves the polymer, the reaction did not proceed and the sheets partially retained their shape even after three days. In the 1.2 M systems, the polymer sheets were completely dissolved in six hours, and complete or partial decomposition was confirmed. However, as time further passed, the red color became darker and a side reaction occurred in many of the solvents. Based on the above, it was found that the decomposition and side reaction proceed quickly in the 1.2 M system, so the process requires attention. In the 0.12 M systems, the decomposition proceeded slowly and there was little reaction with darkening of red color. In conclusion, the polymer sheets decomposed under a strong acid condition (for example, pH 1 or lower) even when the organic solvents were used. Therefore, the polymer does not decompose during use in common applications and can exist stably. In terms of suppressing side reactions, the hydrochloric acid concentration of 0.12 M was effective.

[Experiment 3]

A network polymer (network polyimine) was synthesized by the method described below. In the polymer in this experiment, the repeating unit (II) is a divalent group containing an aromatic ring.

A Young tube was filled with terephthalaldehyde (6 mmol) and purged with nitrogen. Ethanol (5 mL) was added for dissolution. Then, 2 mM ammonia ethanol solution (10 mL) was added, and the mixture was stirred at 60°C for 12 hours, resulting in a product powder. The product was filtered, washed with ethanol, and dried overnight at 100°C. The yield was 98%. The reaction formula for synthesis of the network polyimine is shown below.

[Chem. 13]

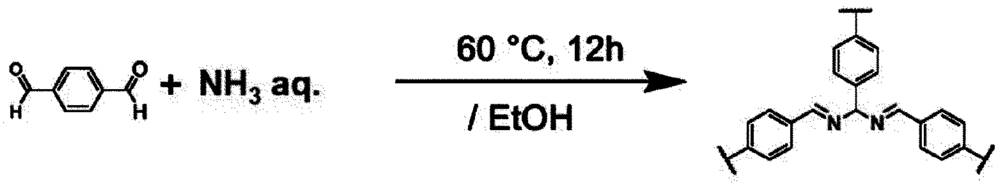

<Structural Analysis of Network Polymer>

Based on the following structural analysis results, it was confirmed that the reaction described by the formula above occurred and the network polyimine was synthesized in Experiment 3.

(1) Infrared Spectroscopic Analysis

Infrared spectroscopic analysis of the polymer in Experiment 3 was performed by the same method as for the polymer in Experiment 1 described above. The result is shown in FIG. 7. In FIG. 7, the vertical axis represents absorbance and the horizontal axis represents wavenumber (unit: $cm^{-1}$). As illustrated in FIG. 7, in the synthesized polymer, the characteristic C=N stretching vibration peak of methanediamine was observed around 1630 $cm^{-1}$, suggesting the formation of polyimine.

(2) $^{13}C$ Solid-State NMR Measurement

$^{13}C$ solid-state NMR measurement of the polymer synthesized in Experiment 3 was performed using a nuclear magnetic resonance system (JNM ECA 500 available from JEOL Ltd.). The measurement was performed under the measurement conditions including a frequency of 500 MHz, a magic angle spinning (MAS) speed of 15 kHz, and a contact time of 2 msec, by the cross polarization magic angle spinning (CP-MAS) method and the dipolar decoupling magic angle spinning (DD-MAS) method. The sample was in a powder form and entirely measured at room temperature. The result is shown in FIG. 8. In FIG. 8, the vertical axis represents signal intensity and the horizontal axis represents chemical shift values (unit: ppm).

In the NMR spectrum, the aromatic peak at 120 to 140 ppm and the imine peak at 160 to 170 ppm were confirmed. The peak at 76 ppm appears to be the central carbon peak of methanediamine. The chemical shift of this peak is highly dependent on the substituent directly bonded tothe aromatic group, and the electron-withdrawing imine bonding at the para position is thought to shift the peak toward the high magnetic field side.

<Evaluation of Thermal Properties of Network Polymer>

The thermal properties of the polymer in Experiment 3 were evaluated by the same method as for the polymer in Experiment 1 described above. Since the polymer obtained in Experiment 3 undergoes intramolecular cyclization upon heating, this measurement was performed on an imidazoline polymer subjected to heat treatment in advance. The reaction formula for the intramolecular cyclization reaction is shown below.

[Chem. 14]

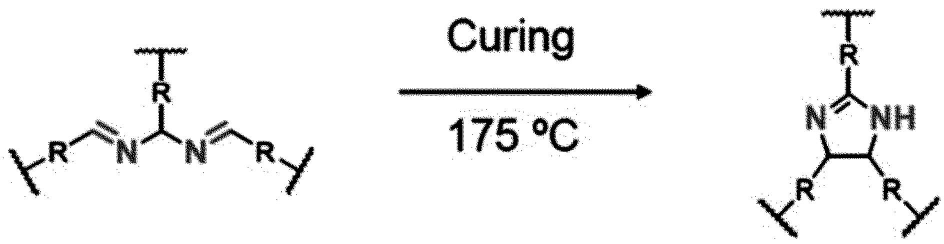


TG-DTA measurement was performed under an atmospheric condition ($N_2$:$O_2$ = 4:1) using a Pt pan, from 20 to 1000°C. The measurement result (Tg and DTG) is shown in FIG. 9A. The definitions of the vertical and horizontal axes in FIG. 9A are the same as in FIG. 2A. The 5% weight loss temperature $T_{5\%}$ of the polymer in Experiment 3 (imidazoline polymer after heat treatment) was 381°C.

DSC measurement was performed from -50°C to 300°C at a temperature increase rate of 10°C/min. The result is shown in FIG. 9B. The definitions of the vertical and horizontal axes in FIG. 9B are the same as in FIG. 2B. No glass transition temperature was identified from the result in FIG. 9B.

When compared to the heat resistance temperatures of common thermosetting resins, the heat resistance temperatures of the polymer in Experiment 3 are equivalent to those of phenolic resins (340 to 380°C), indicating very good heat resistance.

<Evaluation of Decomposability of Network Polymer>

First, 5 mL of N,N-dimethylformamide (DMF) and 1 mL of 1M hydrochloric acid aqueous solution were added to 25 mg of the polymer and stirred. The polymer dissolved in the acidic decomposing solution (mixture of DMF and HClaq) in about 30 minutes to a yellow solution. After allowed to stand for another 12 hours at 70°C, the solution became colorless. The solvent was evaporated by nitrogen blowing, resulting in a white solid.

Next, $^1$H-NMR measurement was performed on the resulting white solid. The frequency was set to 400 MHz, dimethyl sulfoxide-d (DMSO-d) was used as a solvent, and the measurement was performed at room temperature. The chemical shift standard was tetramethylsilane (0 ppm). The result is shown in FIG. 10. In FIG. 10, the vertical axis represents signal intensity and the horizontal axis represents chemical shift values (unit: ppm).

As illustrated in FIG. 10, the NMR spectrum showed the peaks of terephthalaldehyde and ammonium ions (ammonium chloride) of the raw materials, indicating decomposition into the raw materials. Finally, the solid was washed with water and dried overnight at 100°C, resulting in a white solid. The decomposition yield was 92%.

The same decomposability evaluation was performed for the imidazoline polymer after heat treatment, but the imidazoline polymer did not exhibit any decomposability.

[Experiment 4]

A linear polyimine was synthesized in the same way as in [Experiment 2] above, except that dodecanal was used instead of butyraldehyde (butanal). Synthesis was performed in two steps in the same way as in [Experiment 2]. The reaction formula is as follows.

As a result of GPC measurement, the obtained linear polyimine had a number average molecular weight Mn of $1.58 \times 10^6$ in terms of polystyrene, a weight average molecular weight of $2.58 \times 10^6$, and a poly dispersity index (PDI) of 1.81. The method of GPC measurement is the same as in Experiment 2.

Step 1

[Chem. 15]

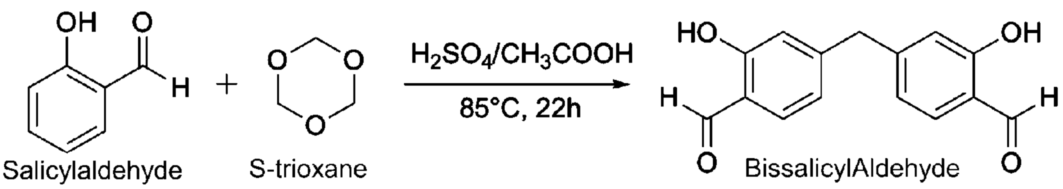


Salicylaldehyde S-trioxane BissalicylAldehyde

Step 2

[Chem. 16]

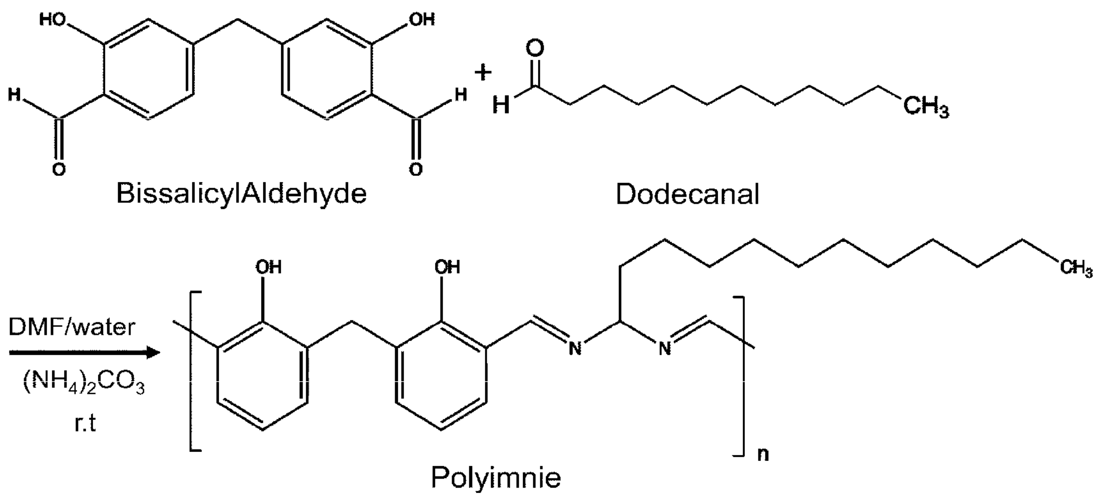


BissalicylAldehyde

Dodecanal

Polyimnie

<Confirmation of Press Formability>

The formability of the obtained linear polymer was checked. First, a gel-like product obtained as a result of the synthesis described above was poured into a mold made of polytetrafluoroethylene. The product was then degassed at 100°C for 2 hours, cured in a hot press (120°C, 10 MPa, 10 min), and post-cured at 130°C for 2 hours.

FIG. 11 is an image illustrating the resulting platelike formed product and its flexibility. Although the image is in black and white (dots), the formed product is homogeneous, orange and transparent.

<Structural Analysis of Linear Polymer>

Based on the following structural analysis results, it was confirmed that the reaction described by the formula above occurred and the linear polyimine was synthesized in Experiment 4.

(1) $^{1}$H-NMR Measurement

The structure of the linear polymer was identified by $^{1}$H-NMR measurement by the same method as in Experiment 2. The result is shown in FIG. 12. In the figure, the vertical axis represents signal intensity and the horizontal axis represents chemical shift values (ppm). Based on the NMR spectrum, the synthesis of linear polyimine with the desired structure was confirmed.

(2) Infrared Spectroscopic Analysis

Infrared spectroscopic analysis of the linear polymer in Experiment 4 was performed by the same method as in Experiment 2. The result is shown in FIG. 13. In the figure, the vertical axis represents absorbance and the horizontal axis represents wavenumber ($cm^{-1}$). In the IR spectrum, C=N stretching vibrations (denoted as "C=N bond stretching oscillation" in the figure) were observed. Aliphatic stretching vibrations (described as "aliphatic stretching vibration" in the figure), which may be derived from a dodecyl group, were also observed.

<Evaluation of Thermal Properties of Linear Polymer>

The thermal properties of the linear polymer in Experiment 4 were evaluated by the same method as in Experiment 2. The result showed that the Tmax value of linear polymer, that is, the temperature at which the weight loss is maximum, is 400°C or higher. This indicates that the linear polymer in Experiment 4 has excellent thermal stability. The results are listed in Table 1 below.

Similarly, DSC measurement was performed on the linear polyimine synthesized in Experiment 4. The result showed that the glass transition temperature was 78.1°C. The results are listed in Table 1 below. Based on the above result, it is assumed that an aliphatic hydrocarbon group of a predetermined length (in this example, dodecyl group) promotes molecular chain movement and contributes to the formation of glass transition point (temperature) in the temperature range suitable for thermoforming.

<Evaluation of Mechanical Properties of Linear Polymer>

The mechanical properties of the linear polymer in Experiment 2 were evaluated.

(1) Tensile Test

FIG. 14 illustrates the stress-strain curve of the linear polymer in Experiment 2.

The specimen had a width of 10 mm, a length of 6 mm, and a thickness of 0.1 mm, and the tensile speed was 1 mm/min. The test temperature was room temperature.

The result in FIG. 14 shows that the tensile strength was 25.4 MPa. This value was higher than those of the other polyimines. The inset image represents the broken specimen.

(2) Dynamic Viscoelasticity Measurement

The test was performed using a tensile oscillation method (frequency 1 Hz). The specimen had a gauge length of 4 mm, a width of 6.3 mm, and a thickness of 0.1 mm, with a load of 1.5 N and a displacement of 0.24 mm. The measurement temperature range was -10 to 200°C. The glass transition temperature (°C) and the storage modulus obtained from the test results are listed in Table 1. The high glass transition temperature obtained from the test was assumed to be mainly due to high stiffness resulting from a high content of n-conjugated Schiff base structure and the associated hydrogen bonds. Although not illustrated in the figure, the high peak of tanδ supported this assumption.

The table below lists the physical properties of the linear polymer in Experiment 4 obtained from the tests described above. Tg in the table below represents the glass transition temperature.

[Table 1]

| Strength (MPa) | [a]$T_g$ (DSC) (°C) | [b]$T_g$ (DMA) (°C) | [c]$T_{max}$ (°C) | Storage modulus (MPa) |
|---|---|---|---|---|
| 25.4 | 78.1 | 85.4 | 455 | 417 |

<Evaluation of Decomposability of Linear Polymer>

The following formula is the decomposition reaction formula for the linear polyimine synthesized in Experiment 4.

[Chem. 17]

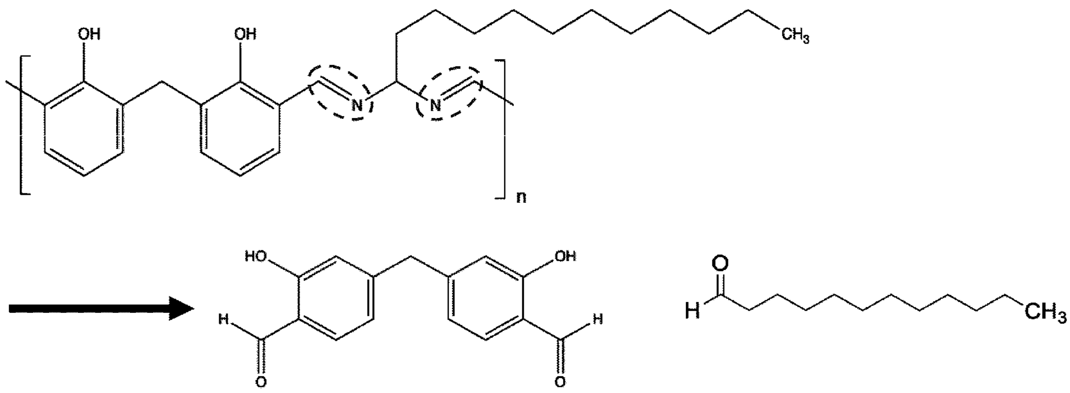

FIG. 15 is an image of a film of the linear polymer in Experiment 4 soaked in 0.1 M hydrochloric acid at room temperature. Immediately after the soaking (left image), the solution was colorless. Although not discernible in the figure, the linear polymer was transparent yellow to orange in color immediately after the soaking. After 6 hours of soaking (right side image), the solution turned light yellow. The linear polymer film disappeared (was not visually identified) in the solution. In the image, the object that looks like a mass is the agitator.

Based on the above results, it was confirmed that an imine bond exchange reaction occurred under the acidic condition and decomposition into the starting materials proceeded.

<Solubility and Chemical Resistance Test>

Rectangular test pieces (1 to 5 mg) of the linear polymer synthesized in Experiment 4 were soaked in 2 mL of different solvents (toluene, DMF, acetone, THF, DMSO, water) for 4 days at room temperature. The solid phase was then separated from the liquid phase. The solvent was removed from the surface of the removed test piece, and the remaining mass was measured.

The mass change ratio D (%) was calculated according to the following formula.

$$\text{(Formula) } D\ (\%) = (1 - W2/W1) \times 100$$

where W1 is the initial mass of the test piece before soaking and W2 is the mass of the test piece after soaking (after soaking for 4 days in the ambient environment).

The table below lists the mass change ratios of the test pieces before and after soaking for 4 days in different solvents at room temperature, obtained as the result of the above test.

FIG. 16 is a comparison image upon soaking and after soaking for 4 days in each solvent. The images in row (a) are images upon soaking, and the images in row (b) are the images after soaking for 4 days. Initially (upon soaking), the test pieces submerged in all of the solvents, but after soaking for 4 days, the test piece soaked in DMF floated in the solvent. All of the test pieces are transparent yellow to orange in color.

[Table 2]

| Solvents | Mass before soaking (mg) | Mass after soaking (mg) | Mass change ratio (D%) |
|---|---|---|---|
| Toluene | 1.4 | 1.3 | +7% |
| DMF | 2.2 | 3.6 | -40% |
| Acetone | 1.6 | 1.5 | +6% |
| THF | 1.3 | 1.5 | -15% |
| DMSO | 5.7 | 5.9 | -3% |
| water | 3.7 | 4.0 | -8% |

Industrial Applicability

The polymer according to the present embodiment described above can reduce production cost and production time and has decomposability. Thus, the applications for various purposes can be expected, such as adhesives, garbage bags, paints, construction materials, medical devices, and solid fuels.

**Claims**

**1.** A polymer comprising a structure including

a repeating unit (I) that is a N,N'-methylenediimine derivative represented by the following formula (1) or (2) and a repeating unit (II) that is a substituted or unsubstituted divalent hydrocarbon group, wherein in the formulae (1) and (2), *1 to *3, *12, and *13 each represent a bonding position, and in the formula (2), $R^{11}$ is a monovalent aliphatic hydrocarbon group:

[Chem. 1]

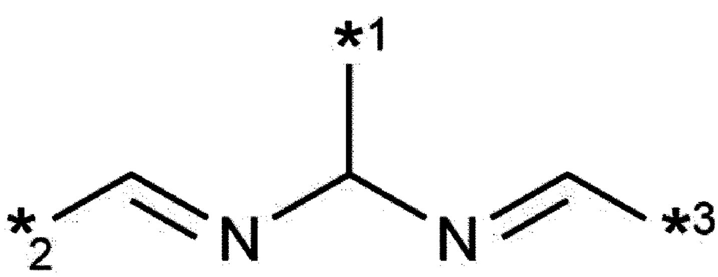

・・・(1)

[Chem. 2]

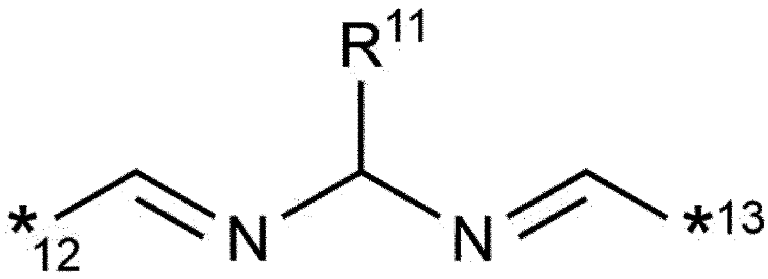

・・・(2)

.

2. The polymer according to claim 1, wherein the repeating unit (I) is a trivalent group represented by the formula (1).

3. The polymer according to claim 2, wherein the repeating unit (II) is a divalent aliphatic hydrocarbon group.

4. The polymer according to claim 3, wherein the repeating unit (II) is a divalent linear alkylene group having 4 or more carbon atoms.

5. The polymer according to any one of claims 2 to 4, wherein

the structure including the repeating unit (I) and the repeating unit (II) comprises a repeating unit represented by the following formula (3), and
in the formula (3), $R^1$ is a divalent aliphatic hydrocarbon group:

[Chem. 3]

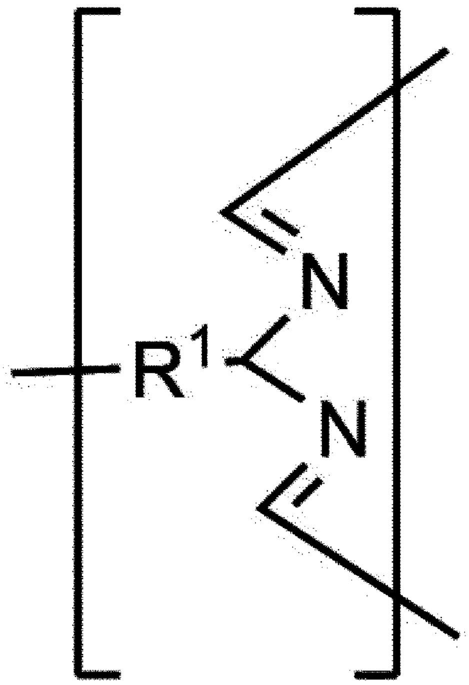

・・・(3)

.

6. The polymer according to claim 1, wherein

the repeating unit (I) is a divalent group represented by the formula (2), and

the repeating unit (II) is a divalent group containing an aromatic ring.

**7.** The polymer according to claim 6, wherein

the structure including the repeating unit (I) and the repeating unit (II) comprises a repeating unit (IV) represented by the following formula (4), and
in the formula (4), $R^{11}$ is a monovalent aliphatic hydrocarbon group, and $R^{12}$ is a divalent group containing an aromatic ring:

[Chem. 4]

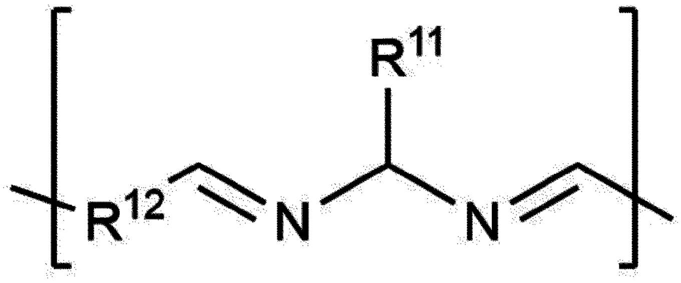

···(4)

.

**8.** A method for synthesizing the polymer according to any one of claims 1 to 7, the method comprising reacting at least one aldehyde with ammonia.

**9.** The method for synthesizing the polymer according to claim 8, wherein

the repeating unit (I) of the polymer is a trivalent group represented by the formula (1), and
the at least one aldehyde is a dialdehyde in which two aldehyde groups are bonded to a substituted or unsubstituted divalent hydrocarbon group that is the repeating unit (II) of the polymer.

**10.** The method for synthesizing the polymer according to claim 8, wherein

the repeating unit (I) of the polymer is a divalent group represented by the formula (2), and
the at least one aldehyde comprises

a dialdehyde in which two aldehyde groups are bonded to a substituted or unsubstituted divalent hydrocarbon group that is the repeating unit (II) of the polymer, and
a monoaldehyde in which one aldehyde group is bonded to a monovalent aliphatic hydrocarbon group that is $R^{11}$ in the formula (2).

[FIG.1]

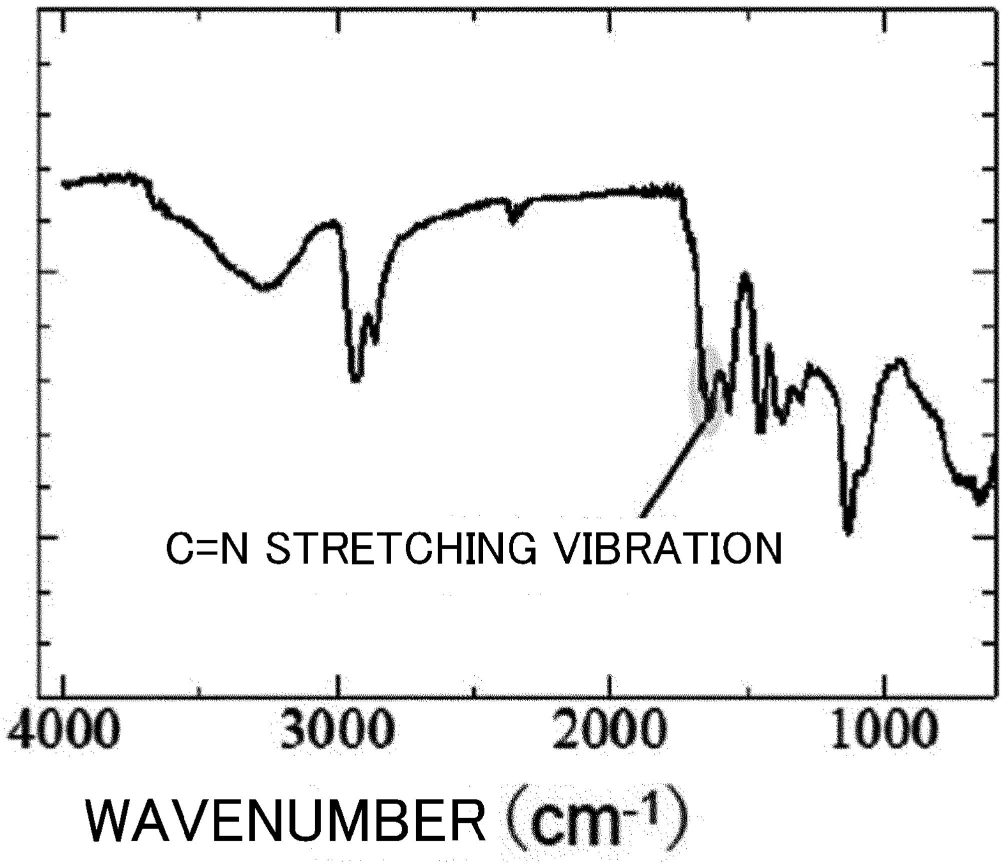
C=N STRETCHING VIBRATION
4000
3000
2000
1000
WAVENUMBER (cm-1)

[FIG.2A]

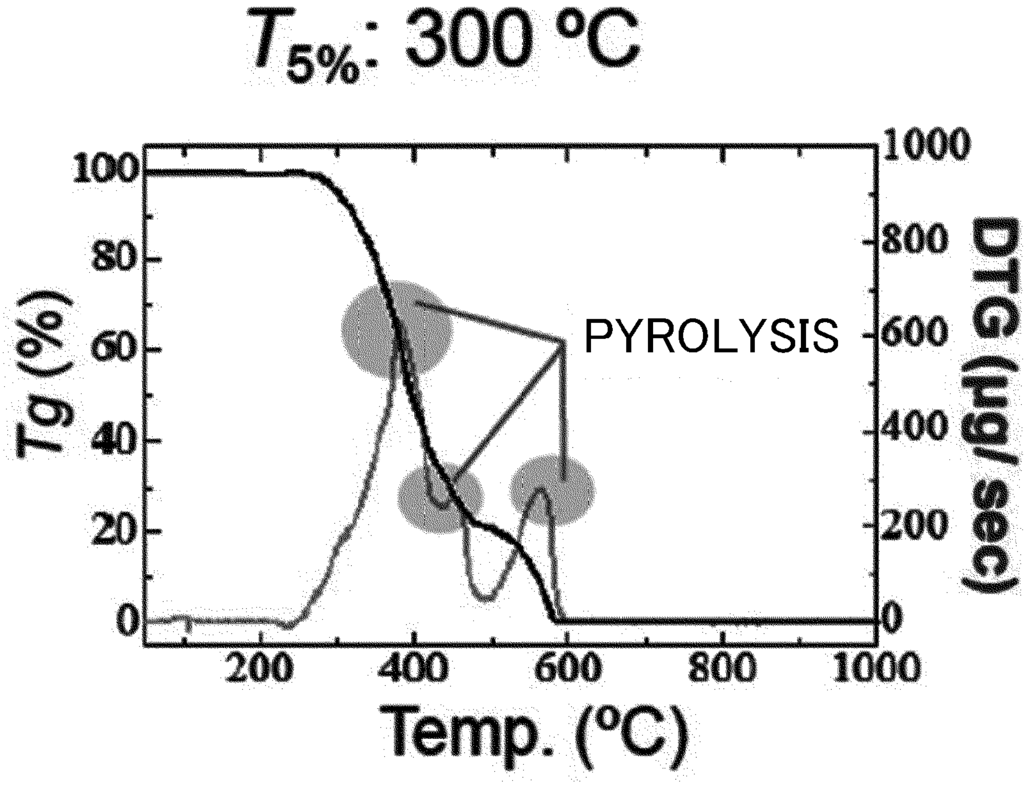
$T_{5\%}$: 300 °C
PYROLYSIS
Tg (%)
DTG (μg/ sec)
Temp. (°C)
100
80
60
40
20
0
1000
800
600
400
200
0
200
400
600
800
1000

[FIG.2B]

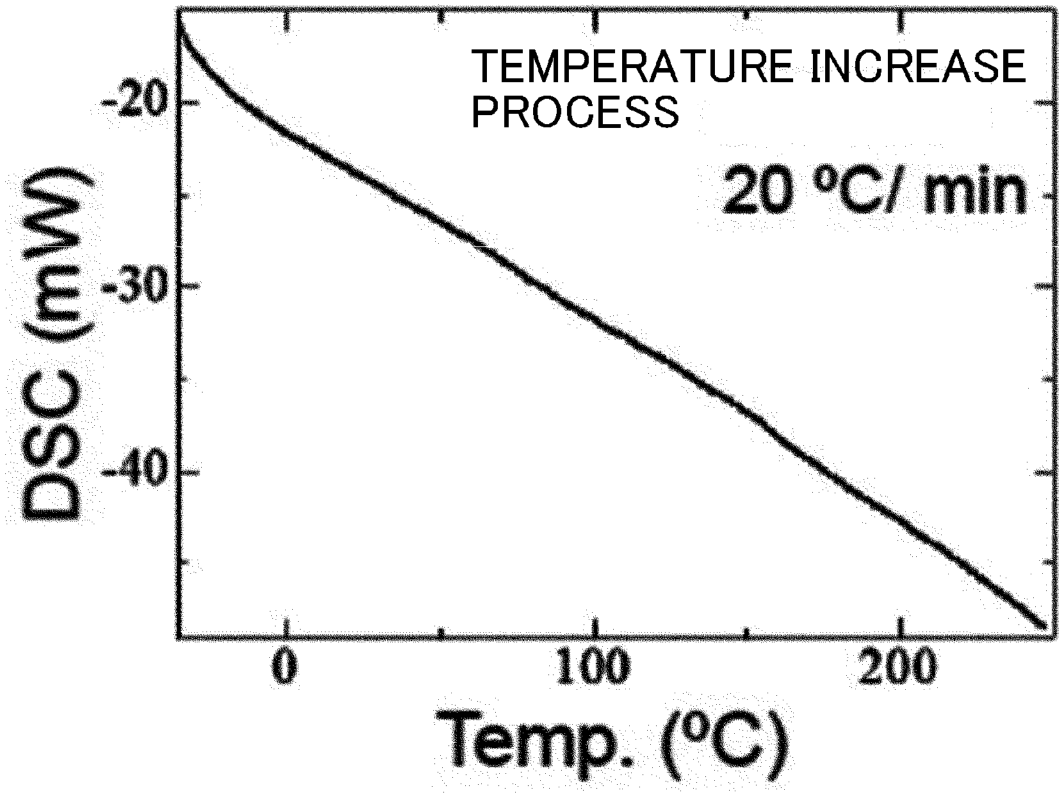
TEMPERATURE INCREASE PROCESS
20 ºC/ min
DSC (mW)
-20
-30
-40
0
100
200
Temp. (ºC)

[FIG.3]

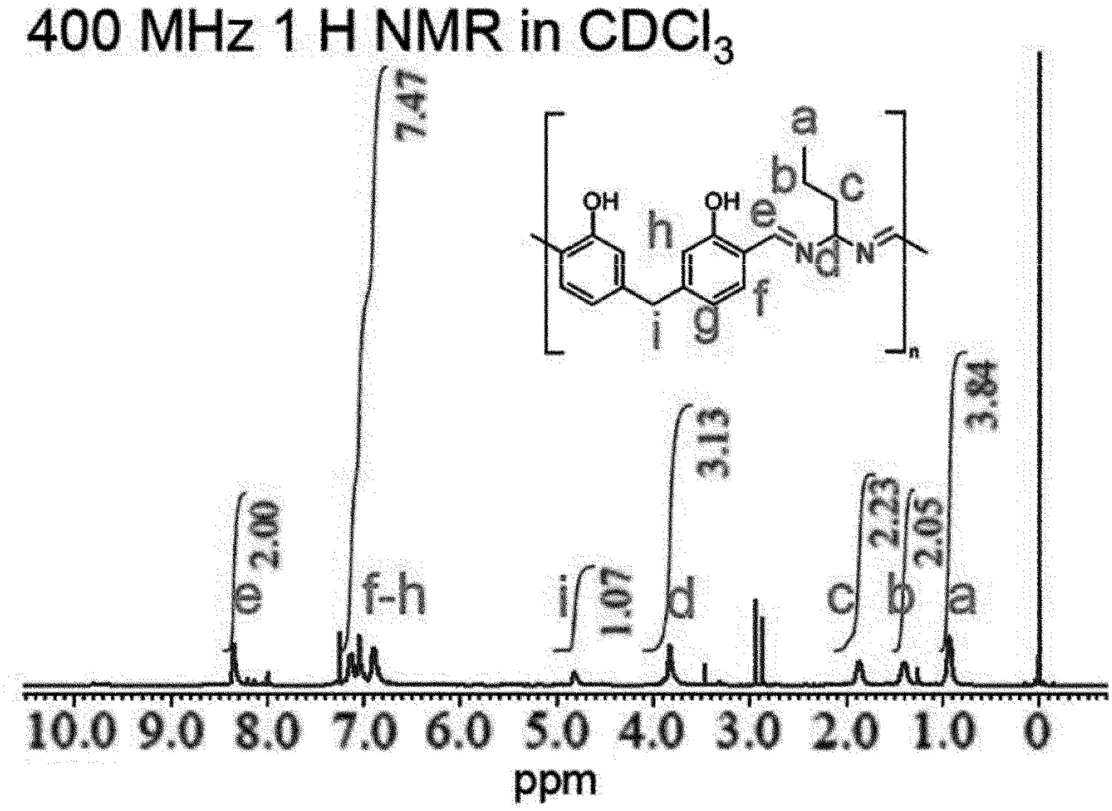
400 MHz 1 H NMR in $CDCl_3$
7.47
3.84
3.13
2.00
2.23
2.05
1.07
e
f-h
i
d
c
b
a
10.0 9.0 8.0 7.0 6.0 5.0 4.0 3.0 2.0 1.0 0
ppm

[FIG.4]

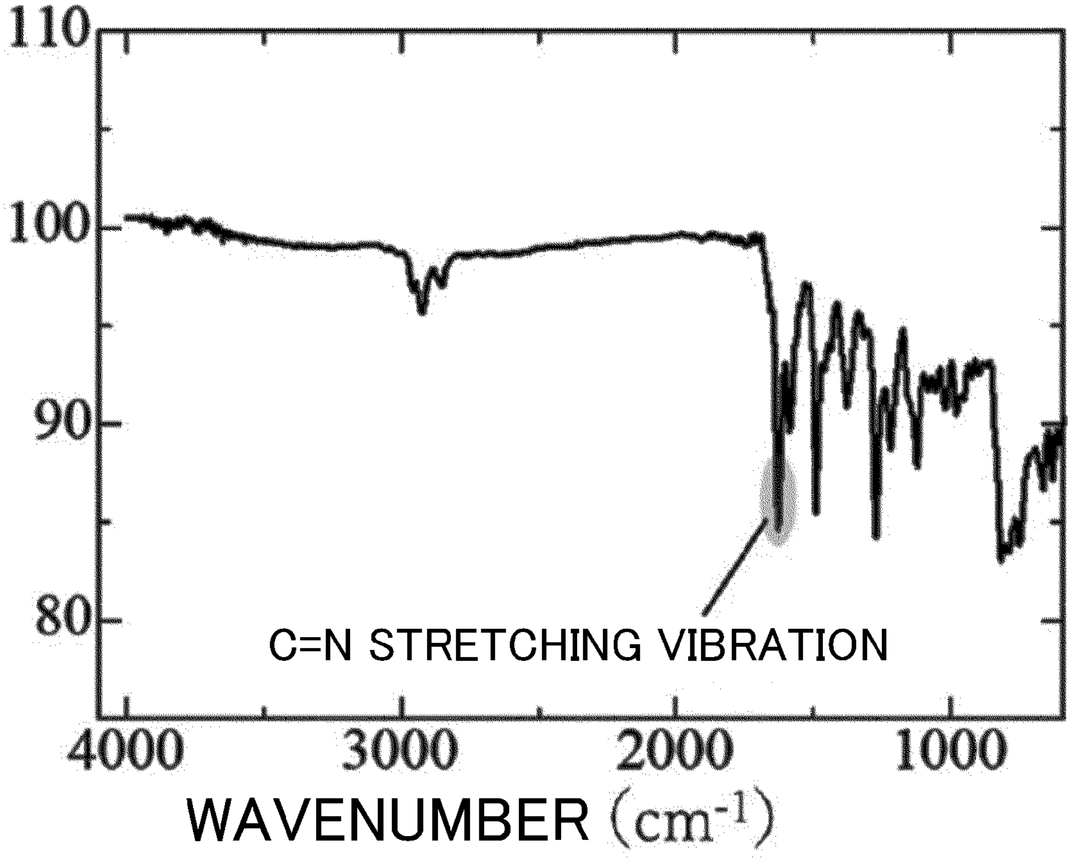
110
100
90
80
C=N STRETCHING VIBRATION
4000
3000
2000
1000
WAVENUMBER (cm-1)

[FIG.5A]

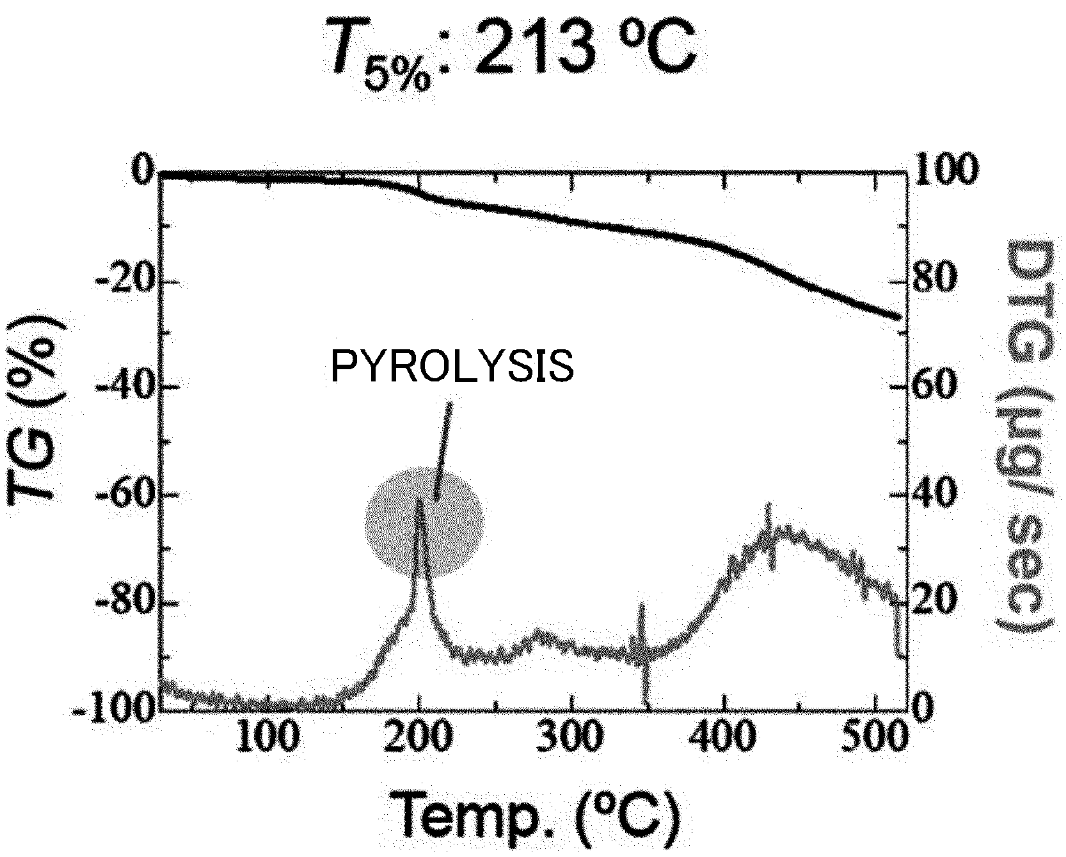
$T_{5\%}$: 213 °C
0
-20
-40
-60
-80
-100
100
80
60
40
20
0
100
200
300
400
500
TG (%)
DTG (μg/ sec)
PYROLYSIS
Temp. (°C)

[FIG.5B]

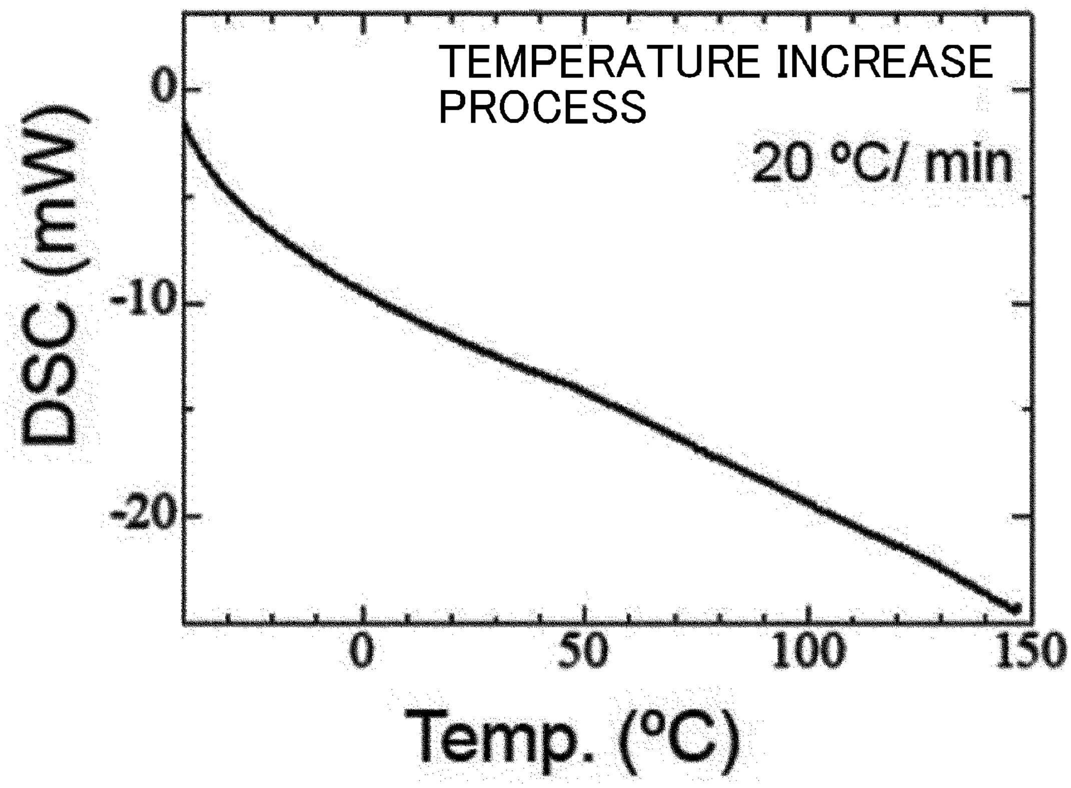
TEMPERATURE INCREASE
PROCESS
20 °C/ min
DSC (mW)
0
-10
-20
0
50
100
150
Temp. (°C)

[FIG.6A]

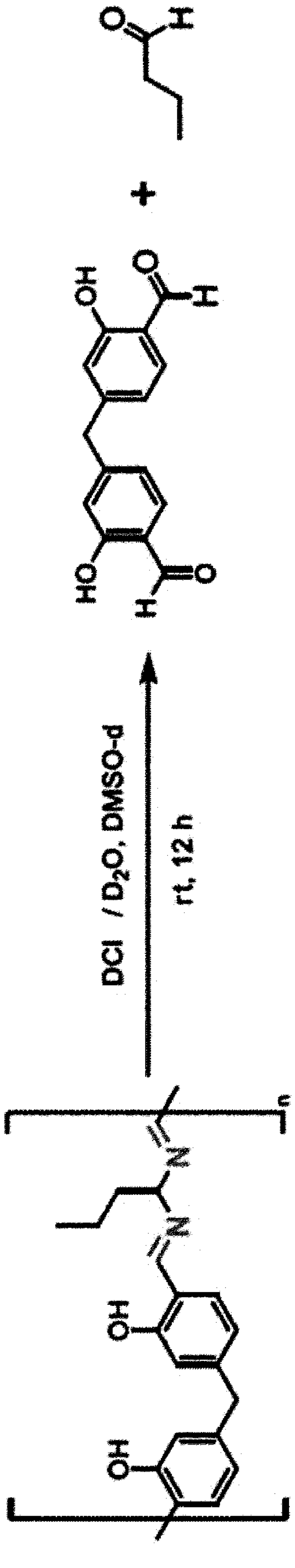

[FIG.6B]

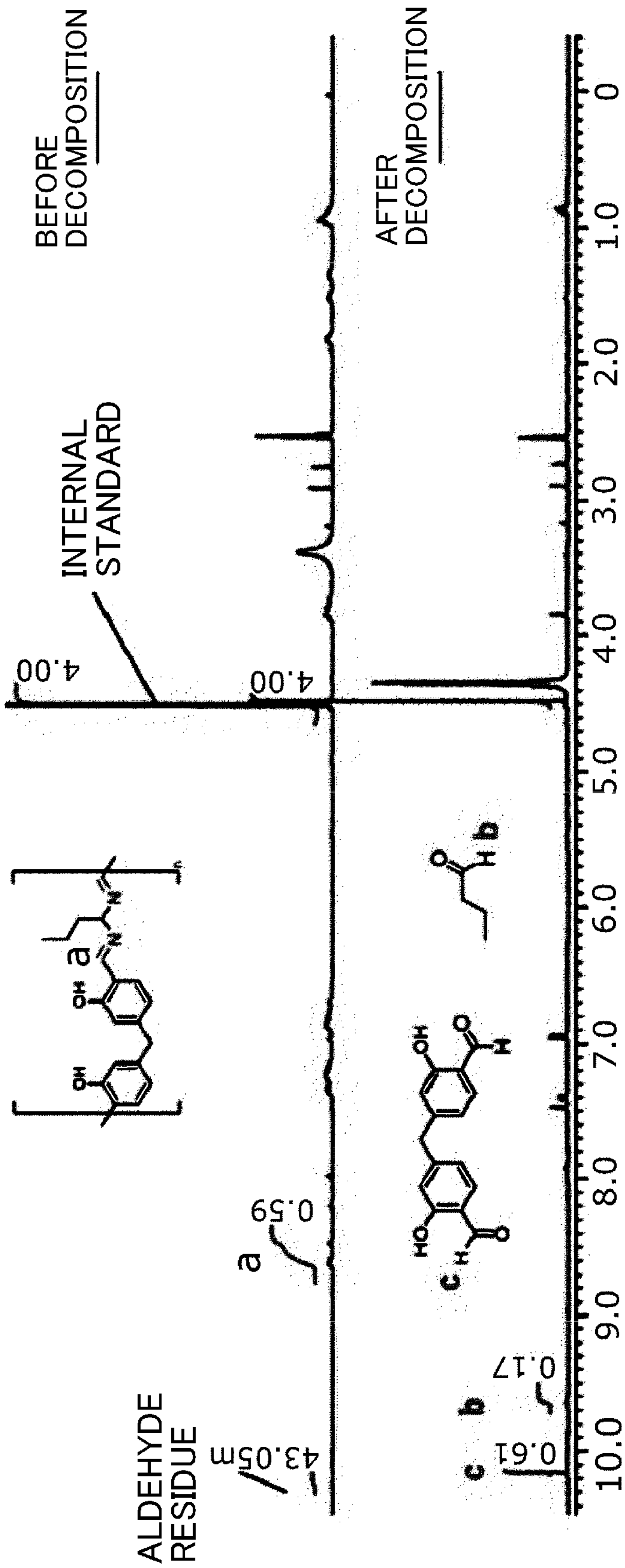
BEFORE DECOMPOSITION
AFTER DECOMPOSITION
INTERNAL STANDARD
4.00
4.00
a
a
0.59
ALDEHYDE RESIDUE
43.05m
c
b
0.17
0.61
0
1.0
2.0
3.0
4.0
5.0
6.0
7.0
8.0
9.0
10.0

[FIG.7]

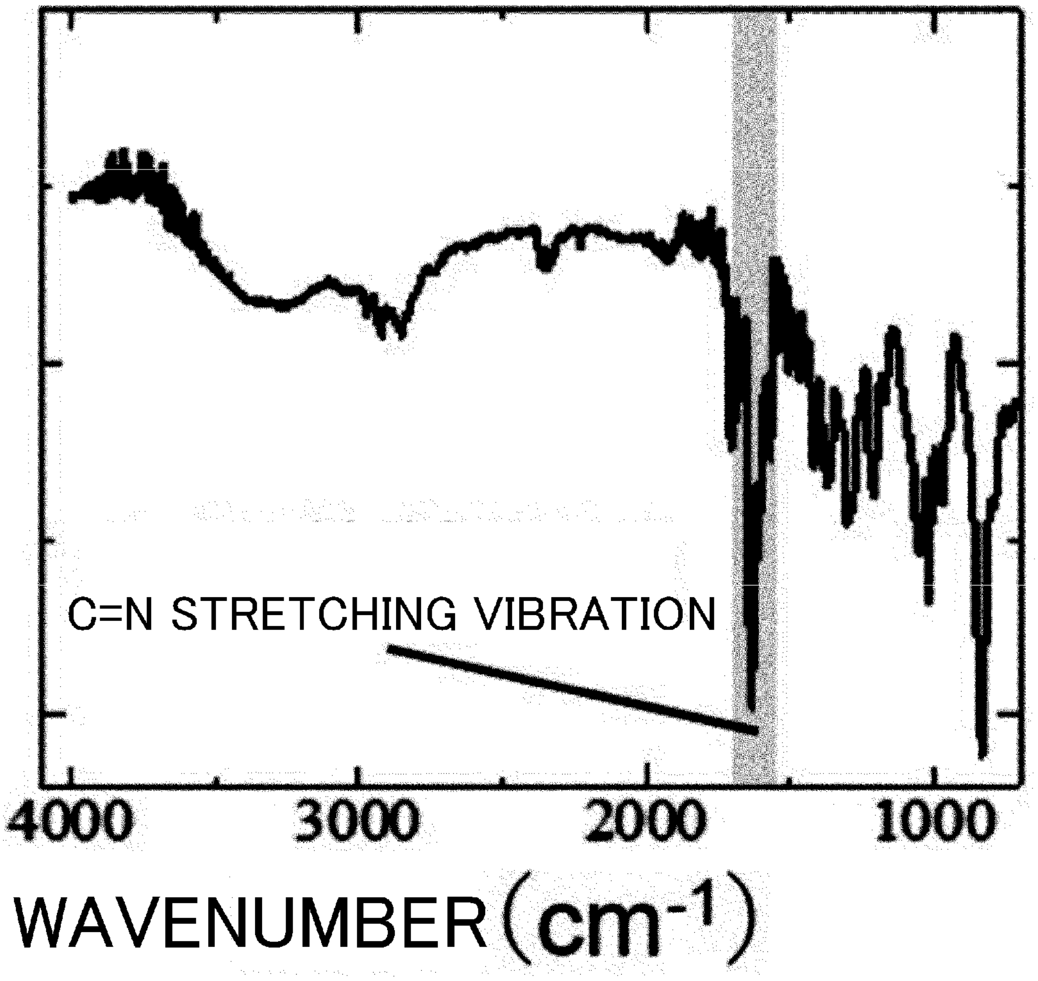
C=N STRETCHING VIBRATION
4000
3000
2000
1000
WAVENUMBER (cm-1)

[FIG.8]

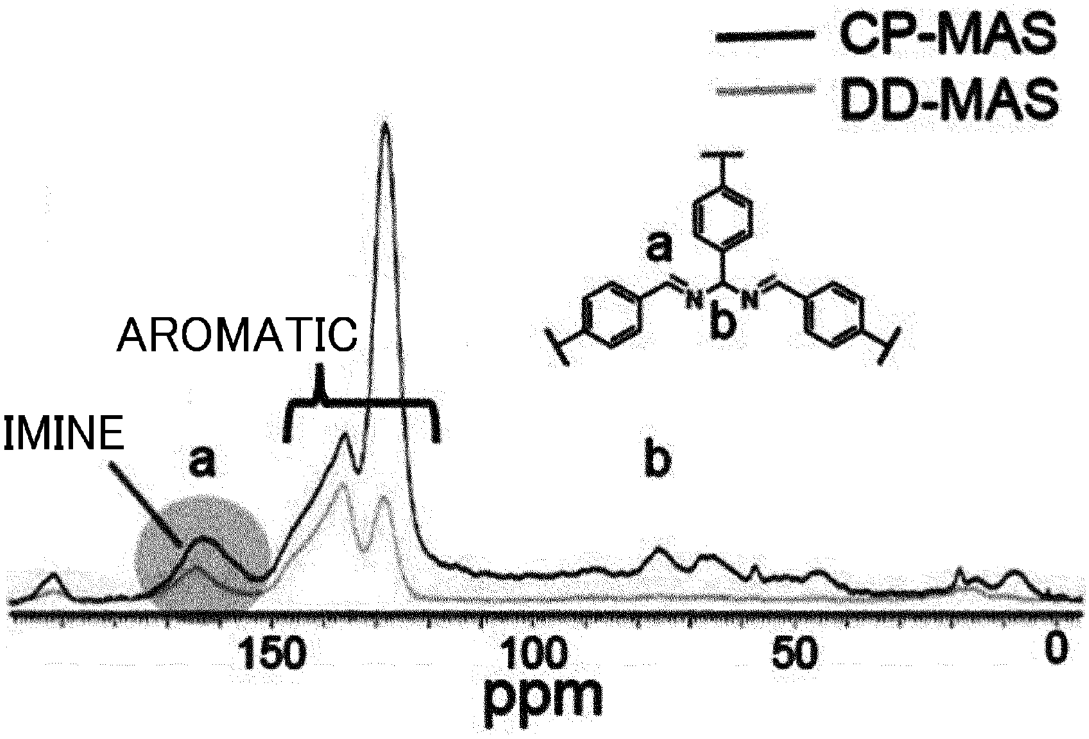

[FIG.9A]

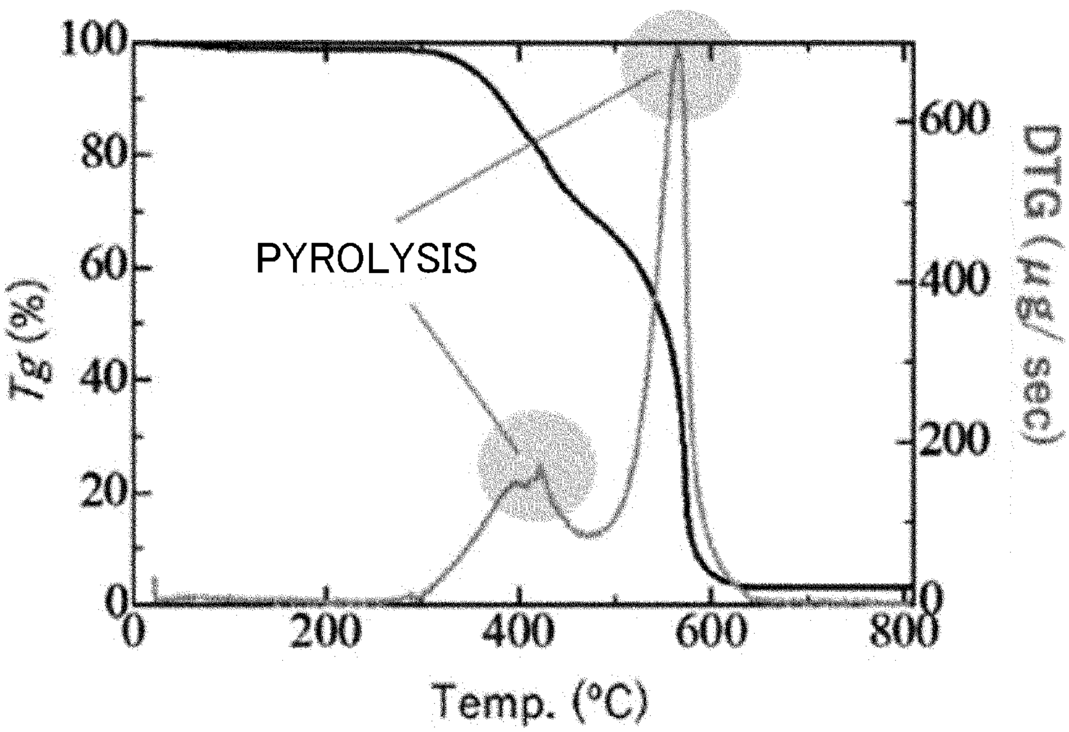
100
80
60
40
20
0
Tg (%)
600
400
200
0
DTG (μg/ sec)
PYROLYSIS
0
200
400
600
800
Temp. (°C)

[FIG.9B]

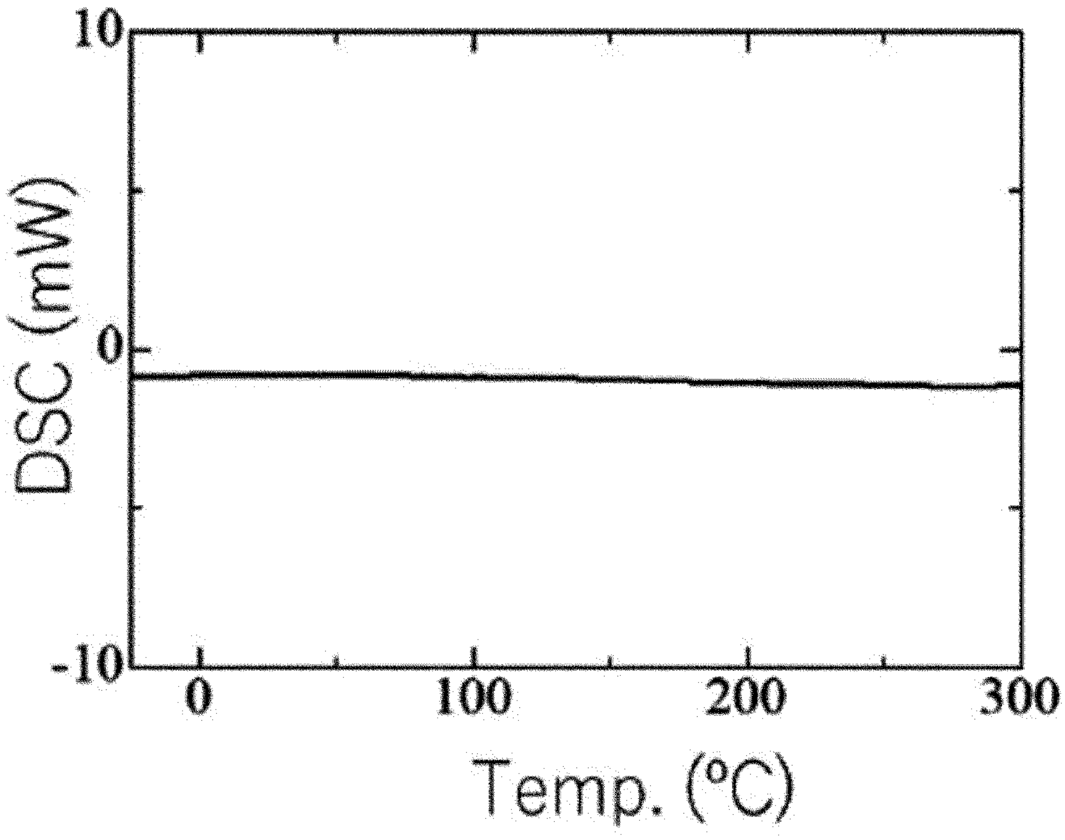

[FIG.10]

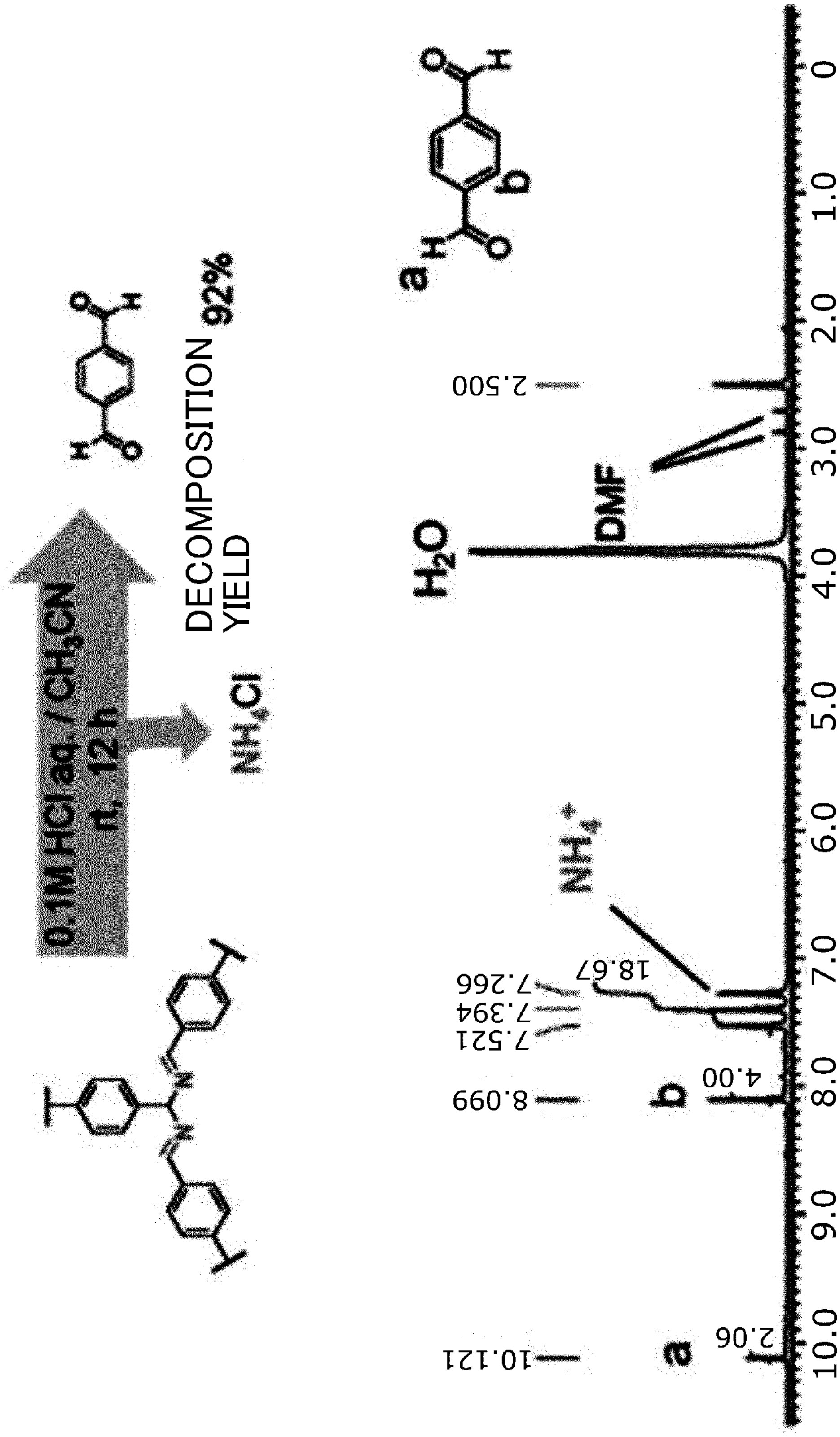
0.1M HCl aq. / $CH_3CN$
rt, 12 h
$NH_4Cl$
DECOMPOSITION YIELD 92%
$H_2O$
DMF
$NH_4^+$
a
b
2.500
7.266
7.394
7.521
8.099
10.121
18.67
4.00
2.06
0
1.0
2.0
3.0
4.0
5.0
6.0
7.0
8.0
9.0
10.0

[FIG.11]

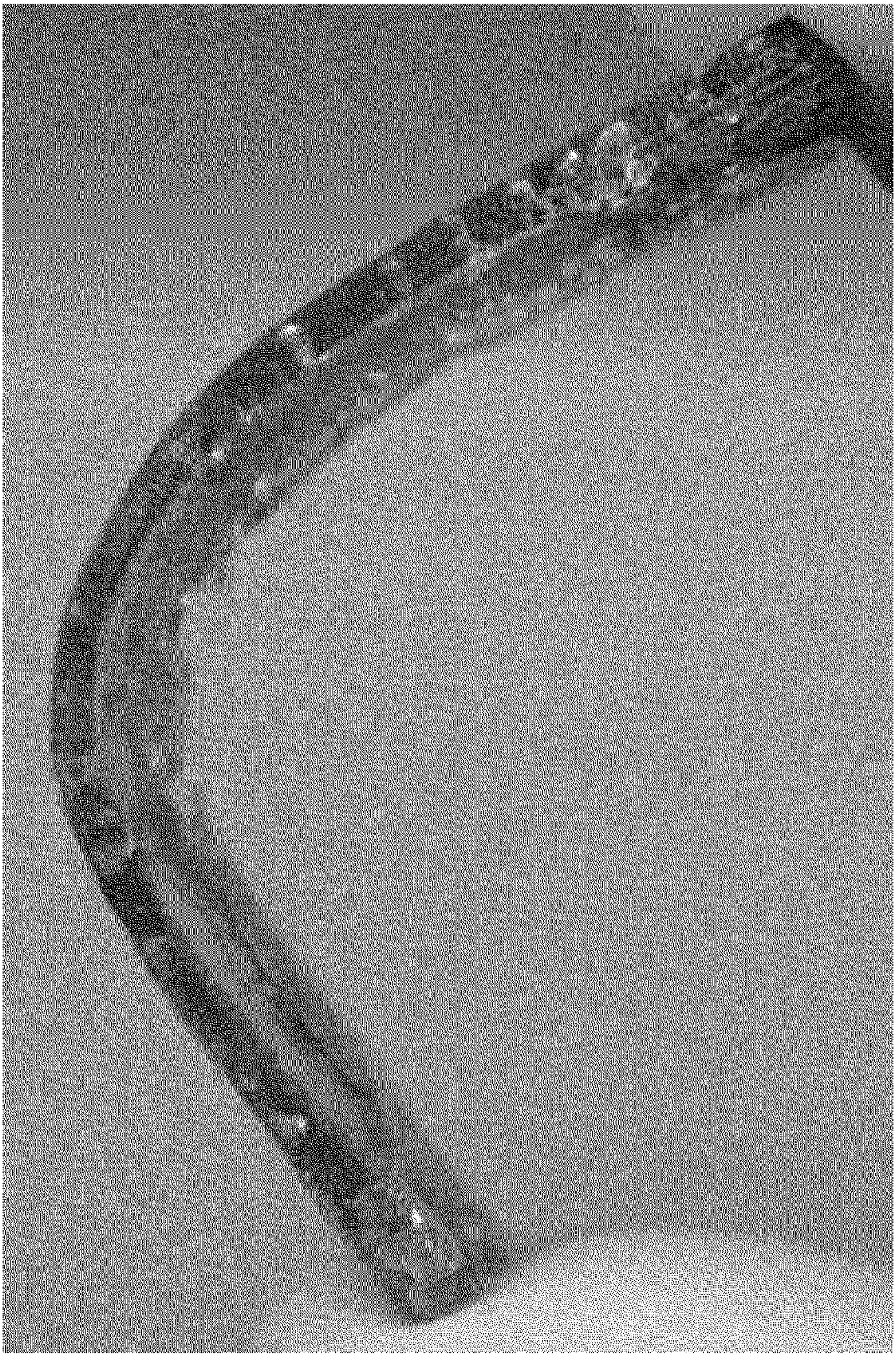

[FIG.12]

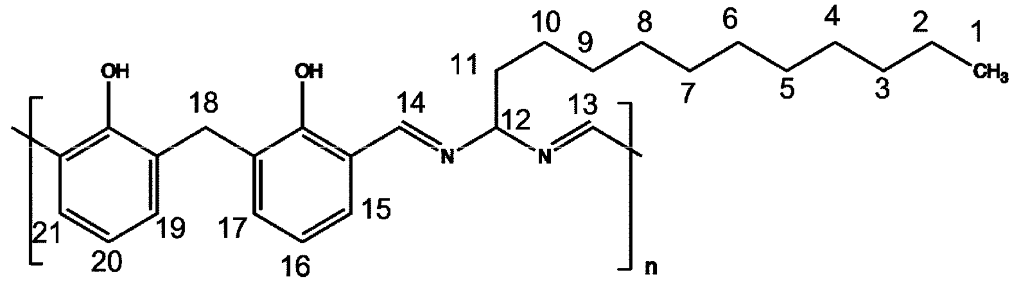

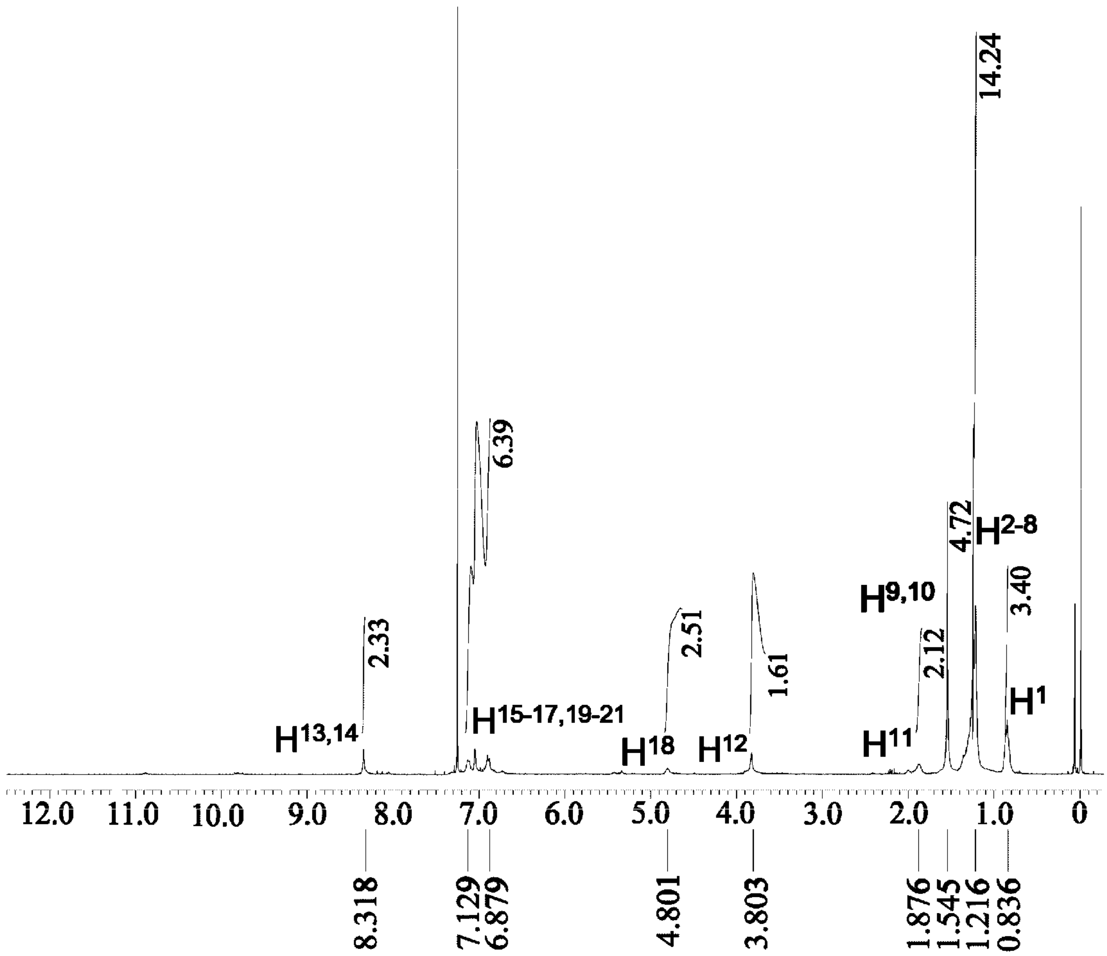
14.24
6.39
4.72
H2-8
3.40
H9,10
2.33
2.51
2.12
1.61
H1
H15-17,19-21
H13,14
H18
H12
H11
12.0 11.0 10.0 9.0 8.0 7.0 6.0 5.0 4.0 3.0 2.0 1.0 0
8.318
7.129
6.879
4.801
3.803
1.876
1.545
1.216
0.836

[FIG.13]

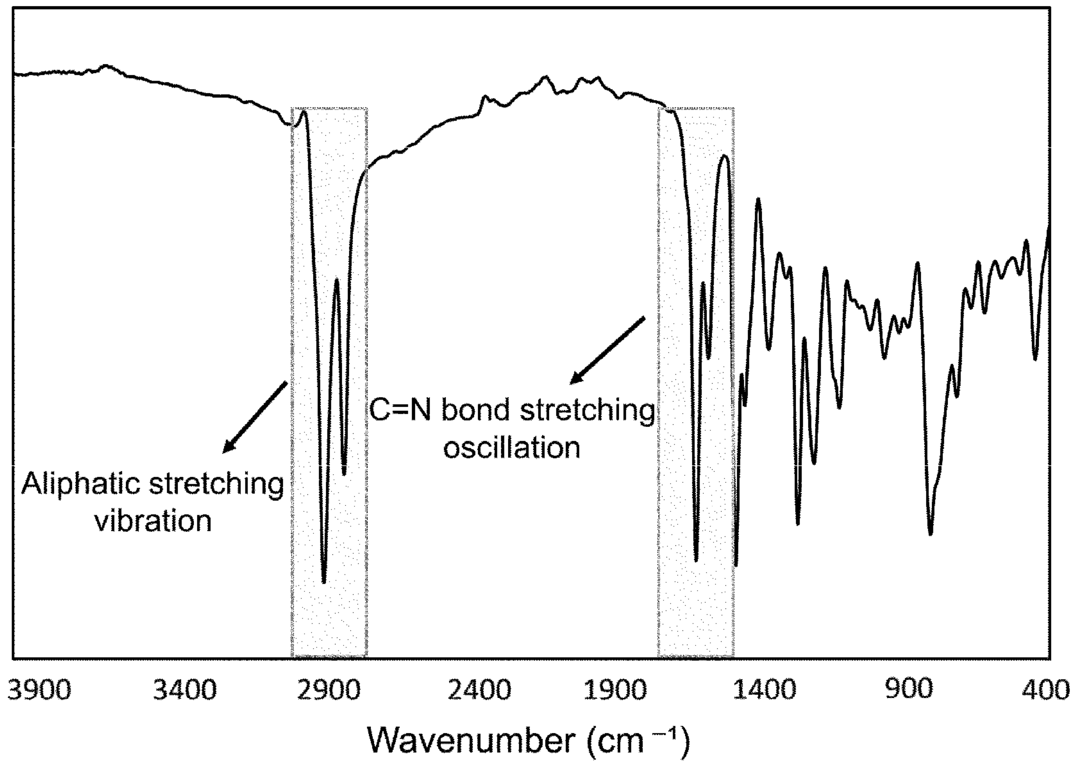
Aliphatic stretching vibration
C=N bond stretching oscillation
3900
3400
2900
2400
1900
1400
900
400
Wavenumber (cm −1)

[FIG.14]

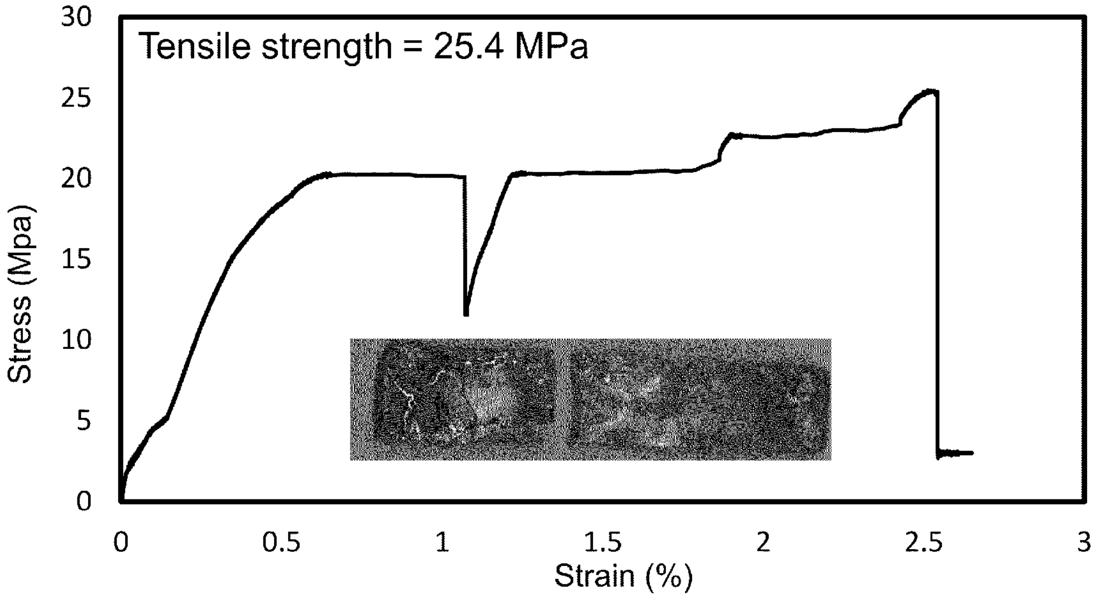
Tensile strength = 25.4 MPa
Stress (Mpa)
30
25
20
15
10
5
0
0
0.5
1
1.5
2
2.5
3
Strain (%)

[FIG.15]

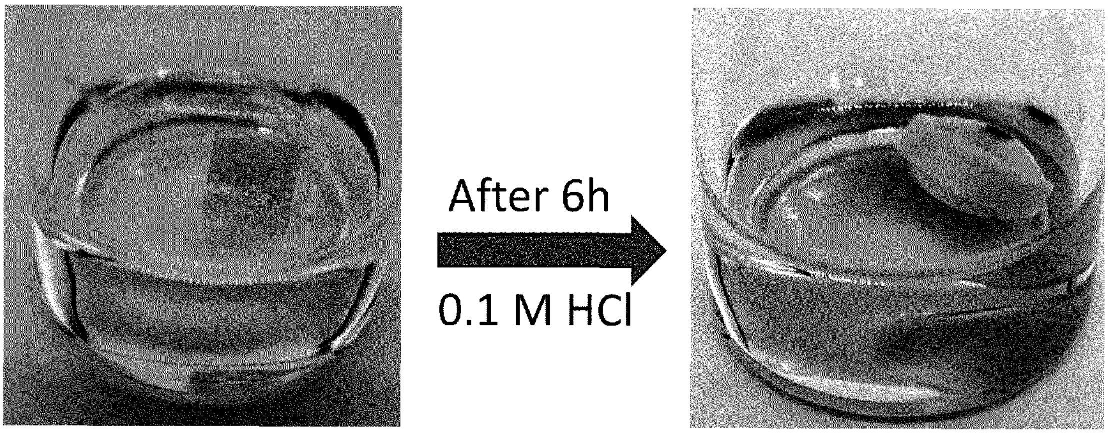

[FIG.16]

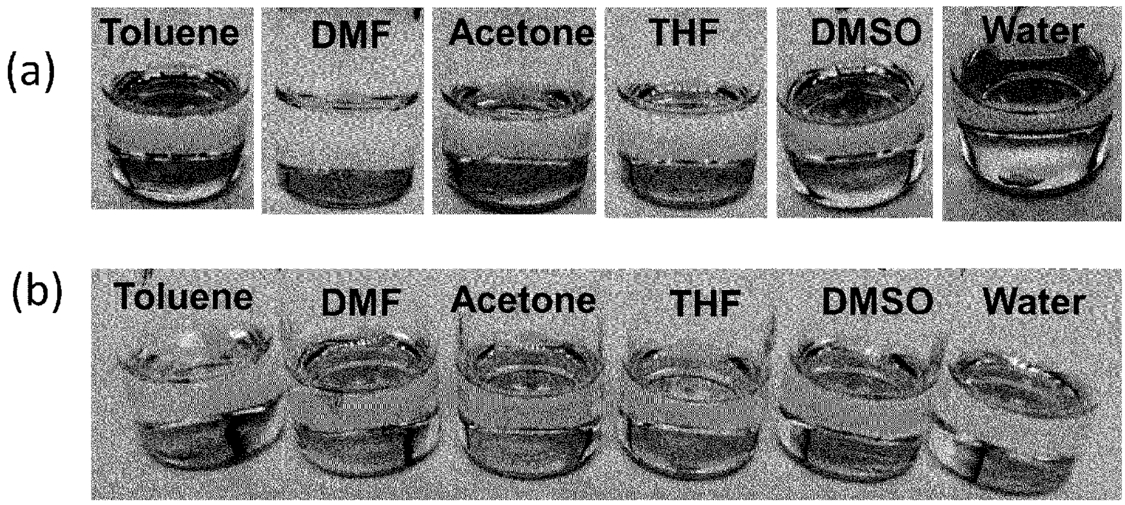
(a)
Toluene
DMF
Acetone
THF
DMSO
Water
(b)
Toluene
DMF
Acetone
THF
DMSO
Water

## INTERNATIONAL SEARCH REPORT

International application No.
**PCT/JP2023/045084**

**A. CLASSIFICATION OF SUBJECT MATTER**

***C08G 12/02***(2006.01)i
FI: C08G12/02

According to International Patent Classification (IPC) or to both national classification and IPC

**B. FIELDS SEARCHED**

Minimum documentation searched (classification system followed by classification symbols)

C08G12/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | US 3506613 A (OWENS ILLINOIS INC.) 14 April 1970 (1970-04-14) | 1-10 |
| A | CN 103509165 A (BEIJING FORESTRY UNIVERSITY) 15 January 2014 (2014-01-15) | 1-10 |
| A | CN 104017920 A (DECISION CHEMICAL CO., LTD.) 03 September 2014 (2014-09-03) | 1-10 |
| A | WO 2004/003044 A2 (LEHN, Jean-Marie) 08 January 2004 (2004-01-08) | 1-10 |
| A | JP 11-269380 A (ARAKAWA CHEMICAL INDUSTRIES, LTD.) 05 October 1999 (1999-10-05) | 1-10 |
| A | JP 2015-528845 A (COMPAGNIE GENERALE DES ETABLISSEMENTS MICHELIN) 01 October 2015 (2015-10-01) | 1-10 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/045084**

| Patent document cited in search report | Publication date (day/month/year) | Patent family member(s) | Publication date (day/month/year) |
|---|---|---|---|
| US 3506613 A | 14 April 1970 | (Family: none) | |
| CN 103509165 A | 15 January 2014 | (Family: none) | |
| CN 104017920 A | 03 September 2014 | (Family: none) | |
| WO 2004/003044 A2 | 08 January 2004 | (Family: none) | |
| JP 11-269380 A | 05 October 1999 | (Family: none) | |
| JP 2015-528845 A | 01 October 2015 | US 2015/0183983 A1<br>WO 2014/016346 A1<br>EP 2877526 A1<br>CN 104487503 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11269380 A
- JP 2015528845 A